# EUROPEAN PATENT SPECIFICATION

(11) **EP 4 238 706 B1**
(45) Date of publication and mention of the grant of the patent: **31.12.2025**
(21) Application number: 21885838.9
(22) Date of filing: 05.10.2021
(51) Int. Cl.: B25J 3/00, B25J 15/08, B25J 15/00, B25J 15/02

(54) **ROBOT HAND**
ROBOTERHAND
MAIN DE ROBOT

(30) Priority: 29.10.2020 JP 2020181378
(43) Date of publication of application: 06.09.2023
(73) Proprietor: KAWASAKI JUKOGYO KABUSHIKI KAISHA, Kobe-shi, Hyogo 650-8670 (JP)
(72) Inventor: ORYU, Tamami, Chuo-ku, Kobe-shi, Hyogo 6508670 (JP); WADA, Hisao, Chuo-ku, Kobe-shi, Hyogo 6508670 (JP); MURASE, Yohei, Chuo-ku, Kobe-shi, Hyogo 6508670 (JP); FUKUDA, Hiroaki, Chuo-ku, Kobe-shi, Hyogo 6508670 (JP)
(74) Representative: Puschmann Borchert Kaiser Klettner Patentanwälte Partnerschaft mbB
(86) International application number: PCT/JP2021/036878
(87) International publication number: WO 2022/091719

(56) References cited:
- EP-A2- 2 077 095
- CN-A- 109 769 478
- CN-A- 110 640 782
- GB-A- 2 137 160
- JP-A- 2007 203 402
- JP-A- 2012 066 357
- JP-A- 2019 034 371
- JP-A- H11 347 979
- US-A1- 2010 207 412

## Description

The present application relates to a robot hand.

A robot hand that can achieve so-called follow-gripping of a workpiece has been known. For example, JP S62-99094 A discloses a robot hand including a pair of fingers that grips a workpiece, a motor that operates the pair of fingers, and a differential gear mechanism that transmits power of the motor to the pair of fingers. When the workpiece is misaligned with the center of the robot hand, one of the pair of fingers (one finger) closer to the workpiece touches the workpiece first and then stops. Although the one finger stops, the other finger keeps moving and then stops when touches the workpiece. Thus, the follow-gripping of the workpiece is achieved.

The above-described robot hand uses the differential gear mechanism, and thus has a disadvantage in that the other finger moves less smooth after the one finger stops.

Furthermore, CN 110 640 782 A, CN 109 769 478 A and JP H11 347979 A disclosing a robot hand with fingers. These fingers are not slidable in an extending direction of a guide rail. The fingers are rotatable or bendable.

The closest state of the art; US 2010/207412 A1; disclsoes a robot hand comprising a support that has a guide rail that supports the first finger and the second finger to be slidable in a moving direction which is an extending direction of the guide rail.

In view of the foregoing background, the present disclosure has been made to provide a robot hand that can achieve smooth follow-gripping.

An aspect of the present disclosure relates to a robot hand as defined in the appended claim 1 including: a first finger and a second finger; and a first moving mechanism that brings the first and second fingers close to each other in a predetermined moving direction so that the first and second fingers grip a workpiece. The first moving mechanism includes a first movable pulley, a first cord-like member, and a first actuator. The first cord-like member has two ends, one of which is connected to the first finger and the other is connected to the second finger and is wrapped around the first movable pulley. The first actuator moves the first movable pulley. The first actuator moves the first movable pulley so that a tension of the first cord-like member acts on the first and second fingers to bring the first and second fingers close to each other. A first adjustment mechanism is provided that rotates the first movable pulley to move the first cord-like member. The first cord-like member is fixed to the first movable pulley.

In this aspect, the first cord-like member pulls and moves the first and second fingers in accordance with the amount of movement of the first movable pulley caused by the first actuator. Specifically, when the first actuator moves the first movable pulley, the tension of the first cord-like member acts on the first and second fingers to move the first and second fingers in a direction approaching each other. This allows the first and second fingers to approach to each other and grip the workpiece from outside. The amount of movement of the first finger and the amount of movement of the second finger in accordance with the amount of movement of the first movable pulley are suitably adjusted based on a resistance to the movement of the first finger and a resistance to the movement of the second finger. For example, when the first finger touches the workpiece and the resistance to the movement of the first finger increases, the first finger stops, and the amount of movement of the second finger is suitably increased. This allows the second finger to keep moving smoothly toward the workpiece. Thus, the second finger reaches the workpiece to achieve smooth follow-gripping.

Another aspect of the present disclosure relates to a robot hand including: a first finger and a second finger; a support has a guide rail that supports the first finger and the second finger to be slidable in a moving direction which is an extending direction of the guide rail; and a second moving mechanism that moves the first and second fingers away from each other in a predetermined moving direction so that the first and second fingers grip a workpiece. The second moving mechanism includes a second movable pulley, a second cord-like member, and a second actuator. The second cord-like member has two ends, one of which is connected to the first finger and the other is connected to the second finger and is wrapped around the second movable pulley. The second actuator moves the second movable pulley. The second actuator moves the second movable pulley so that a tension of the second cord-like member acts on the first and second fingers to move the first and second fingers away from each other.

A second adjustment mechanism is provided that rotates the second movable pulley to move the second cord-like member, and the second cord-like member is fixed to the second movable pulley.

In this aspect, the second cord-like member pulls and moves the first and second fingers in accordance with the amount of movement of the second movable pulley caused by the second actuator. Specifically, when the second actuator moves the second movable pulley, the tension of the second cord-like member acts on the first and second fingers to move the first and second fingers in a direction away from each other. This allows the first and second fingers to move away from each other and grip the workpiece W from inside. The amount of movement of the first finger and the amount of movement of the second finger in accordance with the amount of movement of the second movable pulley are suitably adjusted based on a resistance to the movement of the first finger and a resistance to the movement of the second finger. For example, when the first finger touches the workpiece W and the resistance to the movement of the first finger increases, the first finger stops, and the amount of movement of the second finger is suitably increased. This allows the second finger to keep moving smoothly toward the workpiece W. Thus, the second finger reaches the workpiece W to achieve smooth follow-gripping.

The robot hand described above can achieve smooth follow-gripping.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown:
- FIG. 1: a schematic view illustrating a robot hand connected to a robot arm;
- FIG. 2: a front view schematically illustrating the robot hand without a front plate;
- FIG. 3: a left side view schematically illustrating the robot hand;
- FIG. 4: a right side view schematically illustrating the robot hand;
- FIG. 5: a plan view schematically illustrating the robot hand without a top plate;
- FIG. 6: a view illustrating first to third movable pulleys and first air cylinders as observed from the right;
- FIG. 7: an enlarged view illustrating the first to third movable pulleys;
- FIG. 8: a cross-sectional view taken along line A-A in FIG. 7;
- FIG. 9: a perspective view schematically illustrating how a wire is wrapped in a first moving mechanism;
- FIG. 10: a perspective view schematically illustrating how a wire is wrapped in a second moving mechanism;
- FIG. 11: a block diagram illustrating a configuration of a control device;
- FIG. 12: a schematic view illustrating the first moving mechanism in a certain state in a close-gripping motion;
- FIG. 13: a view illustrating the third movable pulley at the start of the close-gripping motion;
- FIG. 14: a schematic view illustrating the first moving mechanism in a certain state in the close-gripping motion;
- FIG. 15: a schematic view illustrating the first moving mechanism at the end of the close-gripping motion;
- FIG. 16: a view illustrating the third movable pulley in a centering motion;
- FIG. 17: a view illustrating the third movable pulley at the end of the centering motion;
- FIG. 18: a schematic view illustrating the first moving mechanism at the end of the centering motion;
- FIG. 19: a schematic view illustrating the second moving mechanism in a certain state in an open-gripping motion;
- FIG. 20: a schematic view illustrating the second moving mechanism in a certain state in the open-gripping motion;
- FIG. 21: a schematic view illustrating the second moving mechanism at the end of the open-gripping motion;
- FIG. 22: a schematic view illustrating the second moving mechanism at the end of the centering motion;
- FIG. 23: a schematic view illustrating a configuration of the second moving mechanism of another embodiment;
- FIG. 24: a view illustrating a third movable pulley of another embodiment in a certain state in the centering motion, and
- FIG. 25: a view illustrating the third movable pulley of another embodiment at the end of the centering motion.

Exemplary embodiments will be described in detail below with reference to the drawings.

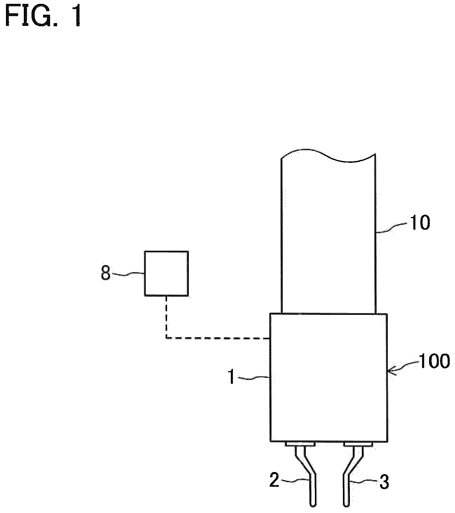

As shown in FIG. 1, a robot hand 100 of the present embodiment (may be hereinafter simply referred to as a "hand 100") is an end effector connected to an end of a robot arm 10. The robot arm 10 is, for example, an articulated arm having a plurality of links connected in series and is provided for a vertical articulated robot. The hand 100 is, for example, rotatably connected to the robot arm 10.

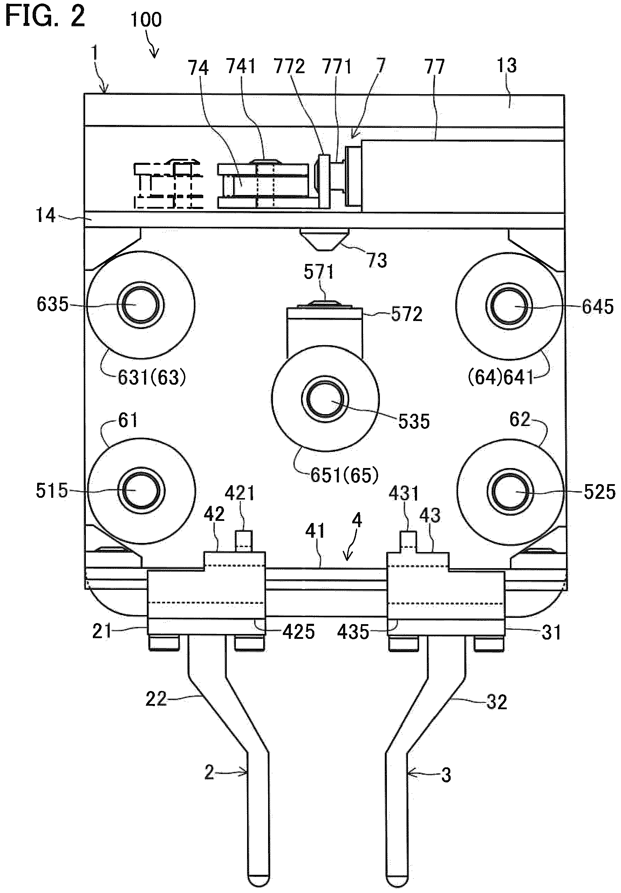

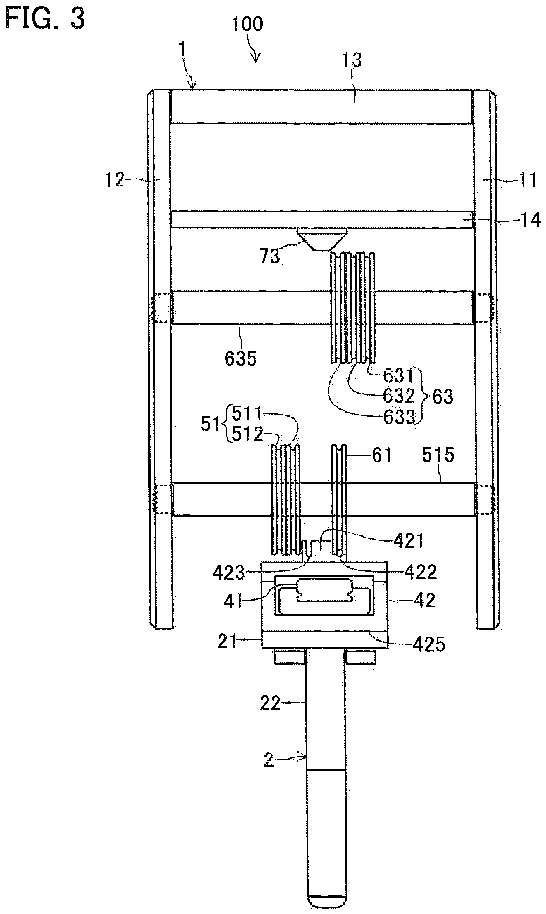

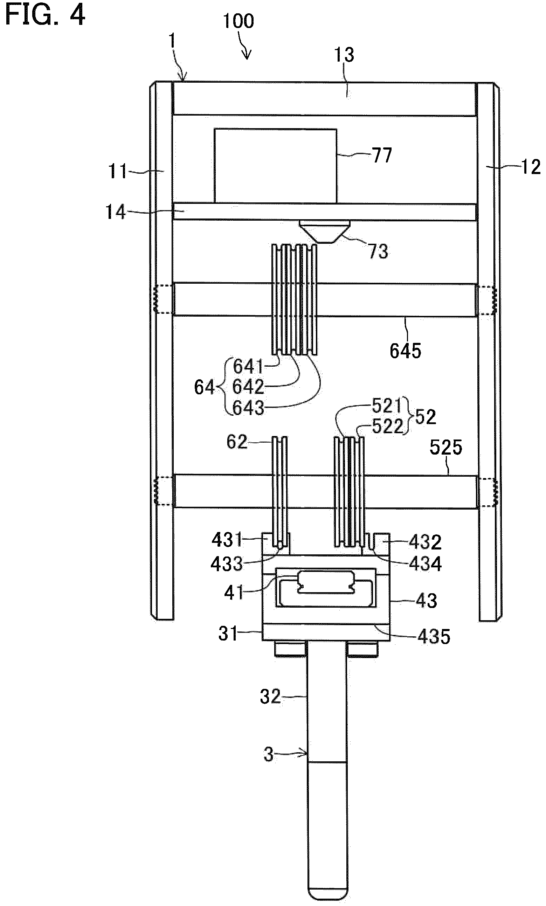

The directions and positions of the hand 100 described herein are relative to the hand 100 with a pair of fingers described later (a first finger 2 and a second finger 3) extending in a vertical direction (a perpendicular direction), i.e., the hand 100 in a state shown in FIG. 1. A left-right direction in FIG. 2 will be referred to as a width direction of a base 1, and a left-right direction in FIGS. 3 and 4 will be referred to as a depth direction of the base 1.

The hand 100 is configured to be able to achieve so-called follow-gripping of a workpiece. The "follow-gripping" is achieved by a pair of fingers (a first finger 2 and a second finger 3). When one of the moving fingers receives an increased resistance, the other finger moves further to grip the workpiece together. For example, although the one finger touches the workpiece first and stops, the other finger does not stop and keeps moving to touch the workpiece so that the fingers grip the workpiece together.

Specifically, as shown in FIGS. 2 to 6, the hand 100 includes a base 1, a first finger 2, a second finger 3, a support 4, a first moving mechanism 5, a second moving mechanism 6, a first adjustment mechanism 7, and a control device 8. Some components of the first adjustment mechanism 1 such as a third air cylinder 77 are not shown in FIG. 3.

The base 1 is a part connected to the robot arm 10 and has a substantially rectangular profile. The base 1 is long in the vertical direction. The base 1 has a front plate 11, a rear plate 12, and a top plate 13. The front plate 11 and the rear plate 12 have the same shape and face each other. The top plate 13 is arranged on top of the front and rear plates 11 and 12 to connect the front and rear plates 11 and 12.

The base 1 also has an intermediate plate 14. The intermediate plate 14 divides an internal space surrounded by the front plate 11, the rear plate 12, and the top plate 13 into vertically arranged spaces. That is, the intermediate plate 14 divides the internal space into an upper space and a lower space. The intermediate plate 14 is arranged closer to the top plate 13 in the internal space, making the upper space smaller than the lower space.

The first and second fingers 2 and 3 are grippers that grip the workpiece. The first and second fingers 2 and 3 may be collectively referred to as the fingers 2 and 3.

Each of the first and second fingers 2 and 3 is a substantially rod-shaped member extending in the vertical direction. The first and second fingers 2 and 3 have the same shape. The first and second fingers 2 and 3 are arranged in parallel with each other. The first and second fingers 2 and 3 are arranged side by side in the width direction of the base 1. The first and second fingers 2 and 3 are shaped to be symmetric about a line extending in the vertical direction (a lengthwise direction). Specifically, the first finger 2 has a basal part 21 and a finger body 22, and the second finger 3 has a basal part 31 and a finger body 32. The basal parts 21 and 31 are plate members extending in a horizontal direction. The finger bodies 22 and 32, each of which is substantially in the shape of a rod, extend downward from lower surfaces of the basal parts 21 and 31. The first and second fingers 2 and 3 may have any other shape than the rod shape or may have shapes different from each other.

The support 4 movably supports the first and second fingers 2 and 3 below the base 1. The first and second fingers 2 and 3 move in the width direction of the base 1, i.e., in the direction in which the fingers 2 and 3 are arranged side by side. The first and second fingers 2 and 3 move with their orientations maintained. Specifically, the fingers 2 and 3 can approach each other in the moving direction to grip (sandwich) the workpiece from outside. The fingers 2 and 3 can also move away from each other in the moving direction to grip the workpiece from inside.

The support 4 includes a guide rail 41, a first guide block 42, and a second guide block 43.

The guide rail 41 guides the first and second guide blocks 42 and 43 and is attached to a lower part of the base 1. The guide rail 41 is a linear rail extending in the width direction of the base 1. Specifically, the guide rail 41 extends in the moving direction of the first and second fingers 2 and 3. The guide rail 41 is arranged almost over the whole width of the base 1.

The first and second guide blocks 42 and 43 are attached to the guide rail 41 to be slidable in the extending direction of the guide rail 41. The first and second guide blocks 42 and 43 are tubular in shape. The guide rail 41 is located inside the first and second guide blocks 42 and 43 (see FIGS. 3 and 4).

A lower surface of the first guide block 42 serves as a finger attachment 425 to which the first finger 2 is attached. A lower surface of the second guide block 43 serves as a finger attachment 435 to which the second finger 3 is attached. Specifically, the basal part 21 of the finger 2 is bolted to the finger attachment 425 to attach the finger 2 to the first guide bloc 42, and the basal part 31 of the finger 3 is bolted to the finger attachment 435 to attach the finger 3 to the second guide block 43. Thus, the fingers 2 and 3 are supported to be movable in parallel with the guide rail 41. The support 4 sets a predetermined movable range of the fingers 2 and 3 (may be hereinafter referred to as a "movable range of the fingers 2 and 3").

A wire attachment 421 is provided on top of the first guide block 42. The wire attachment 421 is an attachment for an end of a wire 56 of the first moving mechanism 5 and an end of a second wire 66 of the second moving mechanism 6, which will be described later. Specifically, the wire attachment 421 has a first slit 422 and a second slit 423. The end of the second wire 66 of the second moving mechanism 6 is fixed to the first slit 422, and the end of the wire 56 of the first moving mechanism 5 is fixed to the second slit 423.

Two wire attachments 431, 432 are provided on top of the second guide block 43. The wire attachments 431, 432 are attachments for the end of the wire 56 of the first moving mechanism 5 and the end of the second wire 66 of the second moving mechanism 6, just like the wire attachment of the first guide block 42. Specifically, the wire attachment 431 has a first slit 433, and the wire attachment 432 has a second slit 434. The end of the second wire 66 of the second moving mechanism 6 is fixed to the first slit 433, and the end of the wire 56 of the first moving mechanism 5 is fixed to the second slit 434.

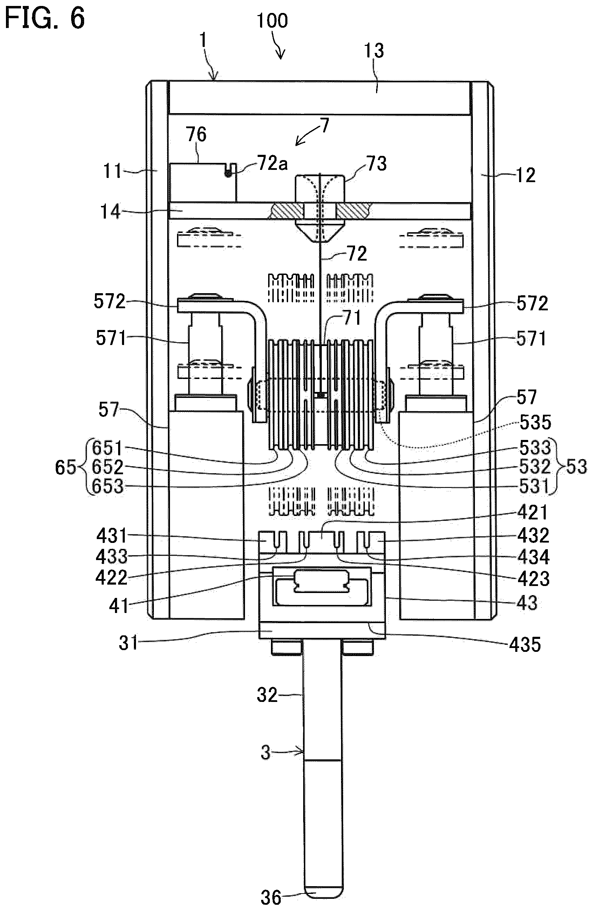

When viewed in the extending direction of the guide rail 41 as shown in FIG. 6, the wire attachment 421 is arranged in the middle of the first guide block 42 in the width direction of the base 1. When viewed in the extending direction of the guide rail 41, the two wire attachments 431, 432 are arranged at the ends of the second guide block 43 in the width direction of the base 1. Thus, when viewed in the extending direction of the guide rail 41, the four slits 422, 423, 433, and 434 do not interfere with each other.

The first moving mechanism 5 brings the first and second fingers 2 and 3 close to each other in the moving direction so that the first and second fingers 2 and 3 grip the workpiece. The first moving mechanism 5 is able to achieve the follow-gripping with the first and second fingers 2 and 3. The "moving direction" is the direction in which the first and second fingers 2 and 3 move in the hand 100 and corresponds with the width direction of the base 1.

Specifically, the first moving mechanism 5 includes a first fixed pulley 51, a second fixed pulley 52, a first movable pulley 53, and the first wire 56. The first moving mechanism 5 is arranged in the lower space formed in the internal space of the base 1 by the intermediate plate 14.

The first fixed pulley 51 is arranged closer to the first finger 2 in the moving direction of the first and second fingers 2 and 3. The second fixed pulley 52 is arranged closer to the second finger 3 in the moving direction of the first and second fingers 2 and 3. Specifically, the first and second fixed pulleys 51 and 52 are arranged to sandwich the fingers 2 and 3 in the moving direction of the fingers 1 and 3. The first and second fixed pulleys 51 and 52 are arranged in a lower part of the lower space in the base 1.

In this example, as shown in FIGS. 3 and 4, the first fixed pulley 51 includes two fixed pulleys 511, 512. The second fixed pulley 52 includes two fixed pulleys 521, 522. The two fixed pulleys 511, 512 are coaxially arranged, i.e., rotatably supported on a common shaft 515. The two fixed pulleys 521, 522 are coaxially arranged, i.e., rotatably supported on a common shaft 525.

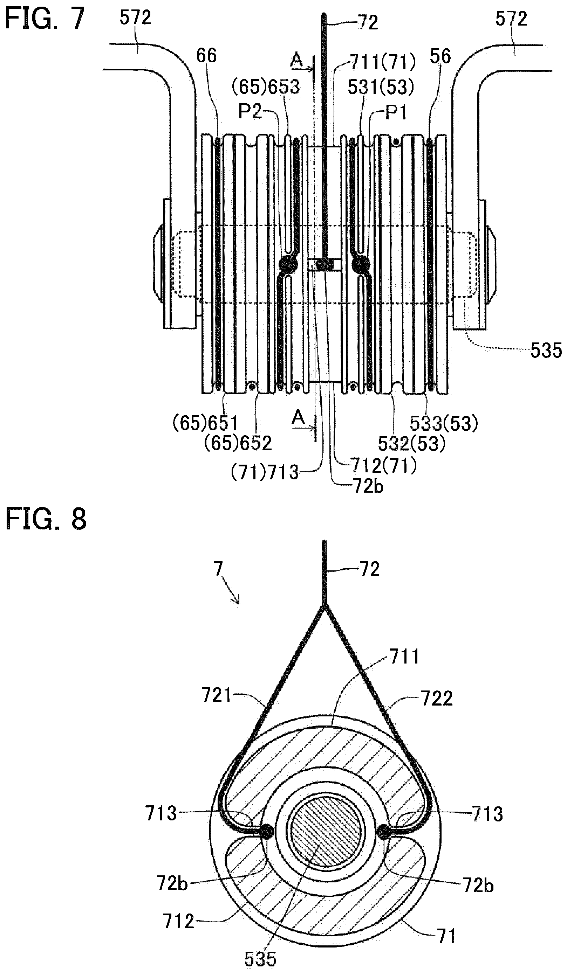

The first movable pulley 53 is located higher than the first and second fixed pulleys 51 and 52. The first movable pulley 53 is located on a perpendicular axis passing the center between the first and second fixed pulleys 51 and 52. In this example, as shown in FIGS. 6 and 7, the first movable pulley 53 includes three movable pulleys 531, 532, 533. The three movable pulleys 531, 532, 533 are coaxially arranged, i.e., rotatably supported on a common shaft 535. The movable pulley 531, which is one of the three movable pulleys 531, 532, 533, is provided with two wire grooves so that the first wire 56 can be wrapped around the movable pulley 531 twice.

The first wire 56 is an example of a first cord-like member. The first wire 56 includes two ends (a first end 56a and a second end 56b), one of which is directly or indirectly connected to the first finger 2 and the other is directly or indirectly connected to the second finger 3, and is wrapped around the second fixed pulley 52, the first movable pulley 53, and the first fixed pulley 51 in this order as the first wire extends from the first finger 2 to the second finger 3. Note that this merely determines the order of wrapping the wire around the three pulleys of the second fixed pulley 52, the first movable pulley 53, and the first fixed pulley 51, and does not exclude a situation that the first wire 56 is wrapped around an additional pulley provided between the three pulleys. The first moving mechanism 5 is not limited to have the above-described configuration.

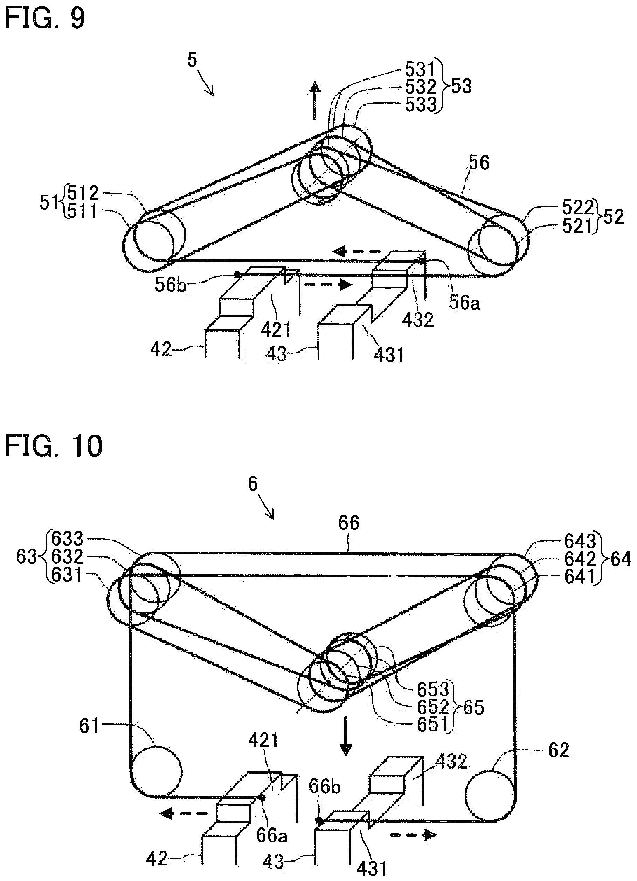

Specifically, the first wire 56 is wrapped in the first moving mechanism 5 as shown in FIG. 9. The first end 56a of the first wire 56 is fixed to the wire attachment 432 (the second slit 434) of the second guide block 43 and is indirectly connected to the second finger 3. The second end 56b of the first wire 56 is fixed to the wire attachment 421 (the second slit 423) of the first guide block 42 and is indirectly connected to the first finger 2. That is, the first end 56a of the first wire 56 is connected to the second finger 3 via the second guide block 43, and the second end 56b of the first wire 56 is connected to the first finger 2 via the first guide block 42. The first wire 56 is wrapped around the fixed pulley 512 (the first fixed pulley 51), the movable pulley 533 (the first movable pulley 53), the fixed pulley 511 (the first fixed pulley 51), the movable pulley 531 (the first movable pulley 53), the fixed pulley 522 (the second fixed pulley 52), the movable pulley 532 (the first movable pulley 53), and the fixed pulley 521 (the second fixed pulley 52) in this order from the first end 56a. The first wire 56 is wrapped around the movable pulley 531 twice (see also FIG. 7).

The second moving mechanism 6 moves the first and second fingers 2 and 3 away from each other in the moving direction so that the first and second fingers 2 and 3 grip the workpiece. The second moving mechanism 6 is also able to achieve the follow-gripping of the workpiece with the first and second fingers 2 and 3. The "moving direction" is the direction in which the first and second fingers 2 and 3 move in the hand 100 as described for the first moving mechanism 5.

Specifically, the second moving mechanism 6 includes a third fixed pulley 61, a fourth fixed pulley 62, a second movable pulley 65, and the second wire 66. The second moving mechanism 6 further includes a fifth fixed pulley 63 and a sixth fixed pulley 64. The second moving mechanism 6 is arranged in the lower space in the base 1 just like the first moving mechanism 5.

The third fixed pulley 61 is arranged closer to the first finger 2 in the moving direction of the first and second fingers 2 and 3. The fourth fixed pulley 62 is arranged closer to the second finger 3 in the moving direction of the first and second fingers 2 and 3. Specifically, the third and fourth fixed pulleys 61 and 62 are arranged to sandwich the fingers 2 and 3 in the moving direction of the fingers 2 and 3. The third and fourth fixed pulleys 61 and 62 are arranged in a lower part of the lower space in the base 1. In this example, each of the third and fourth fixed pulleys 61 and 62 includes a single fixed pulley.

The fifth and sixth fixed pulleys 63 and 64 are arranged in an upper part of the lower space in the base 1. The fifth fixed pulley 63 is arranged above the third fixed pulley 61. The sixth fixed pulley 64 is arranged above the fourth fixed pulley 62. The fifth and sixth fixed pulleys 63 and 64 are arranged at the same level.

In this example, the fifth fixed pulley 63 includes three fixed pulleys 631, 632, 633. The sixth fixed pulley 64 includes three fixed pulleys 641, 642, 643. The three fixed pulleys 631, 632, 633 are coaxially arranged, i.e., rotatably supported on a common shaft 635. The three fixed pulleys 641, 642, 643 are coaxially arranged, i.e., rotatably supported on a common shaft 645.

The second movable pulley 65 is located higher than the third and fourth fixed pulleys 61 and 62 and lower than the fifth and sixth fixed pulleys 63 and 64. The second movable pulley 65 is located on a perpendicular axis passing the center between the third and fourth fixed pulleys 61 and 62 and the center between the fifth and sixth fixed pulleys 63 and 64. In this example, as shown in FIGS. 6 and 7, the second movable pulley 65 includes three movable pulleys 651, 652, 653. The three movable pulleys 651, 652, 653 are coaxially arranged, i.e., rotatably supported on the common shaft 535. That is, the first movable pulley 53 of the first moving mechanism 5 and the second movable pulley 65 of the second moving mechanism 6 are coaxially arranged, i.e., rotatably supported on the common shaft 535. The first and second movable pulleys 53 and 65 move and rotate integrally. The movable pulley 653, which is one of the three movable pulleys 651, 652, 653, is provided with two wire grooves so that the second wire 66 can be wrapped around the movable pulley 653 twice.

The second wire 66 is an example of a second cord-like member. The second wire 66 includes two ends (a first end 66a and a second end 66b), one of which is directly or indirectly connected to the first finger 2 and the other is directly or indirectly connected to the second finger 3, and is wrapped around the third fixed pulley 61, the second movable pulley 65, and the fourth fixed pulley 62 in this order as the second wire extends from the first finger 2 to the second finger 3. Note that this merely determines the order of wrapping the wire around the three pulleys of the third fixed pulley 61, the second movable pulley 65, and the fourth fixed pulley 62, and does not exclude a situation that the second wire 66 is wrapped around an additional pulley provided between the three pulleys.

Specifically, the second wire 66 is wrapped in the second moving mechanism 6 as shown in FIG. 10. The first end 66a of the second wire 66 is fixed to the wire attachment 421 (the first slit 422) of the first guide block 42 and is indirectly connected to the first finger 2. The second end 66b of the second wire 66 is fixed to the wire attachment 431 (the first slit 433) of the second guide block 43 and is indirectly connected to the second finger 3. That is, the first end 66a of the second wire 66 is connected to the first finger 2 via the first guide block 42, and the second end 66b of the second wire 66 is connected to the second finger 3 via the second guide block 43. The second wire 66 is wrapped around the third fixed pulley 61, the fixed pulley 633 (the fifth fixed pulley 63), the fixed pulley 643 (the sixth fixed pulley 64), the movable pulley 652 (the second movable pulley 65), the fixed pulley 642 (the sixth fixed pulley 64), the movable pulley 653 (the second movable pulley 65), the fixed pulley 632 (the fifth fixed pulley 63), the movable pulley 651 (the second movable pulley 65), the fixed pulley 631 (the fifth fixed pulley 63), the fixed pulley 641 (the sixth fixed pulley 64), and the fourth fixed pulley 62 in this order from the first end 66a. The second wire 66 is wrapped around the movable pulley 653 twice (see also FIG. 7).

As shown in FIG. 6, the first and second moving mechanisms 5 and 6 share two first air cylinders 57. The first air cylinders 57 are an example of the first actuator and also an example of the second actuator. Specifically, the first actuator also serves as the second actuator. That is, the same actuator functions as the first and second actuators.

The first air cylinders 57 move the first movable pulley 53 so that the tension of the first wire 56 of the first moving mechanism 5 acts on the first and second fingers 2 and 3 to bring the first and second fingers 2 and 3 close to each other. The first air cylinders 57 also move the second movable pulley 65 so that the tension of the second wire 66 of the second moving mechanism 6 acts on the first and second fingers 2 and 3 to move the first and second fingers 2 and 3 away from each other.

Specifically, the first air cylinders 57 can move the first and second movable pulleys 53 and 65 by moving the common shaft 535. Piston rods 571 of the first air cylinders 57 are connected to the ends of the shaft 535 via connecting members 572. The first air cylinders 57 are arranged so that the piston rods 571 reciprocate (move in and out of the cylinders) in the vertical direction.

The shaft 535 moves up and down, and the first and second movable pulleys 53 and 65 as well, along with the reciprocating motion (in and out motion) of the piston rods 571. For example, when the piston rods 571 move out of the cylinders, i.e., the piston rods 571 are pushed upward, the first and second movable pulleys 53 and 65 move upward (see the upper piston rods drawn with a phantom line in FIG. 6). When the piston rods 571 move inside the cylinders, i.e., the piston rods 571 are pulled downward, the first and second movable pulleys 53 and 65 move downward (see the lower piston rods drawn with a phantom line in FIG. 6).

Thus, as shown in FIG. 9, when the first movable pulley 53 moves upward (see a solid arrow) in the first moving mechanism 5, the tension of the first wire 56 acts on the fingers 2 and 3 via the first and second guide blocks 42 and 43, bringing the fingers 2 and 3 close to each other (see broken arrows). As shown in FIG. 10, when the second movable pulley 65 moves downward (see a solid arrow) in the second moving mechanism 6, the tension of the second wire 66 acts on the fingers 2 and 3 via the first and second guide blocks 42 and 43, moving the fingers 2 and 3 away from each other (see broken arrows).

Thus, the first movable pulley 53 of the first moving mechanism 5 that brings the first and second fingers 2 and 3 close to each other and the second movable pulley 65 of the second moving mechanism 6 that moves the first and second fingers 2 and 3 away from each other move in the opposite directions. This allows the shared first air cylinders 57 to move the first and second movable pulleys 53 and 65.

The first adjustment mechanism 7 rotates the first movable pulley 53 to move the first wire 56, moving the first and second fingers 2 and 3 with a gap between the fingers maintained. The first adjustment mechanism 7 also rotates the second movable pulley 65 to move the second wire 66, moving the first and second fingers 2 and 3 with the gap between the fingers maintained. The first adjustment mechanism 7 also functions as a second adjustment mechanism.

Specifically, the first adjustment mechanism 7 includes a third movable pulley 71, a third wire 72, a guide 73, a wire attachment 76, and a third air cylinder 77. The first adjustment mechanism 7 moves the first and second fingers 2 and 3 so that the center of the gap between the first and second fingers 2 and 3 comes to the center of the movable range of the first and second fingers 2 and 3.

The third movable pulley 71 moves and rotates integrally with the first movable pulley 53 of the first moving mechanism 5 and the second movable pulley 65 of the second moving mechanism 6. Specifically, the third movable pulley 71 is arranged coaxial with the first and second movable pulleys 53 and 65 and rotatably supported on the common shaft 535. The third movable pulley 71 is arranged between the first and second movable pulleys 53 and 65. Specifically, the third movable pulley 71 is formed integrally with the movable pulley 531 of the first moving mechanism 5 and the movable pulley 653 of the second moving mechanism 6 on the sides of the third movable pulley 71. Thus, the movable pulley 531, the third movable pulley 71, and the movable pulley 653 rotate together. That is, the third movable pulley 71 surely rotates as the movable pulleys 531 and 653 rotate for the follow-gripping described later. The third movable pulley 71 also functions as a fourth movable pulley.

The first wire 56 is fixed to the movable pulley 531 of the first movable pulley 53. Thus, the movable pulley 531 rotates when the first wire 56 moves. The second wire 66 is fixed to the movable pulley 653 of the second movable pulley 65. Thus, the movable pulley 653 rotates when the second wire 66 moves. Specifically, the movable pulley 531 has a fixing part P1 that fixes the first wire 56, and the movable pulley 653 has a fixing part P2 that fixes the second wire 66. When the first and second wires 56 and 66 move, the fixing parts keep the first and second wires 56 and 66 from slipping on the movable pulleys 531 and 653. In FIG. 7, the positions of the fixing parts P1, P2 are simplified for convenience's sake.

The third wire 72 is connected to the third movable pulley 71 and wound about the third movable pulley 71 when the movable pulleys 531 and 653 rotate. The third wire 72 is an example of a third cord-like member and also an example of a fourth cord-like member. That is, the third wire 72 also functions as the fourth cord-like member. Specifically, a first end 72a of the third wire 72 is attached to the wire attachment 76 arranged in the upper space in the base 1. A second end 72b of the third wire 72 is attached to the third movable pulley 71.

As shown in FIG. 8, the third movable pulley 71 has two barrels 711, 712. Each of the two barrels 711, 712 is generally formed into a shape obtained by cutting a flat cylindrical member into two in a radial direction. The two barrels 711, 712 of the third movable pulley 71 are arranged to form predetermined gaps 713 between them. That is, two gaps 713 are formed between the two barrels 711, 712. The two gaps 713 are shifted by 180 degrees from each other in a circumferential direction of the third movable pulley 71. The third wire 72 has branches 721, 722 split from the second end 72b, and the ends of the branches 721, 722 serve as the second ends 72b. The two second ends 72b of the third wire 72 are inserted in the two gaps 713. The second ends 72b of the third wire 72 do not come out of the gaps 713. Thus, the second ends 72b of the third wire 72 are attached to the third movable pulley 71. One of the two branches 721, 722 of the third wire 72 is wound about an outer peripheral surface of the barrel 711 when the third movable pulley 71 rotates.

The guide 73 is substantially cylindrical and is provided on the intermediate plate 14. The third wire 72 extends from the third movable pulley 71 toward the upper space in the base 1 through the guide 73. That is, the guide 73 leads the third wire 72 to extend in the vertical direction. In the upper space in the base 1, a movable pulley 74 is provided between the guide 73 and the wire attachment 76. The third wire 72 that has passed through the guide 73 is attached to the wire attachment 76 via the movable pulley 74.

The movable pulley 74 is rotatably attached to a connecting member 772. Specifically, the connecting member 772 has a shaft 741, and the movable pulley 74 is rotatably supported on the shaft 741. The shaft 741 is arranged to extend in the vertical direction. The connecting member 772 is connected to a piston rod 771 of the third air cylinder 77.

The third air cylinder 77 rewinds the third wire 72 wound about the third movable pulley 71 to rotate the first and second movable pulleys 53 and 65 in a reverse direction. That is, the third air cylinder 77 rewinds the third wire 72 from the third movable pulley 71 to rotate the first and second movable pulleys 53 and 65 opposite to the direction of winding the third wire 72 about the third movable pulley 71.

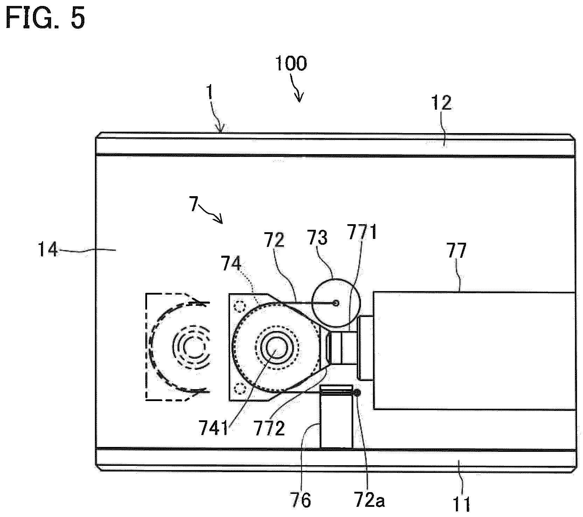

The third air cylinder 77 is an example of a third actuator and also functions as a fourth actuator. The third air cylinder 77 is arranged so that the piston rod 771 reciprocates (moves in and out of the cylinder) in the horizontal direction. For example, at the start of a close-gripping motion and an open-gripping motion described later, the piston rod 771 has moved inside (see the state drawn with a solid line in FIG. 5). When the piston rod 771 moves outside, the third wire 72 wound about the third movable pulley 71 is pulled out (see the state drawn with a phantom line in FIG. 5).

The first adjustment mechanism 7 is configured to rewind the third wire 72 to the maximum to set the third movable pulley 71 in a predetermined first rotation position and moves the first and second fingers 2 and 3 to a predetermined first position with a gap between the fingers 2 and 3 maintained by setting the third movable pulley 71 in the first rotation position. In this example, the position of the third movable pulley 71 when the third wire 72 has been rewound to the maximum is the first rotation position. The predetermined first position is the center of the movable range of the fingers 2 and 3.

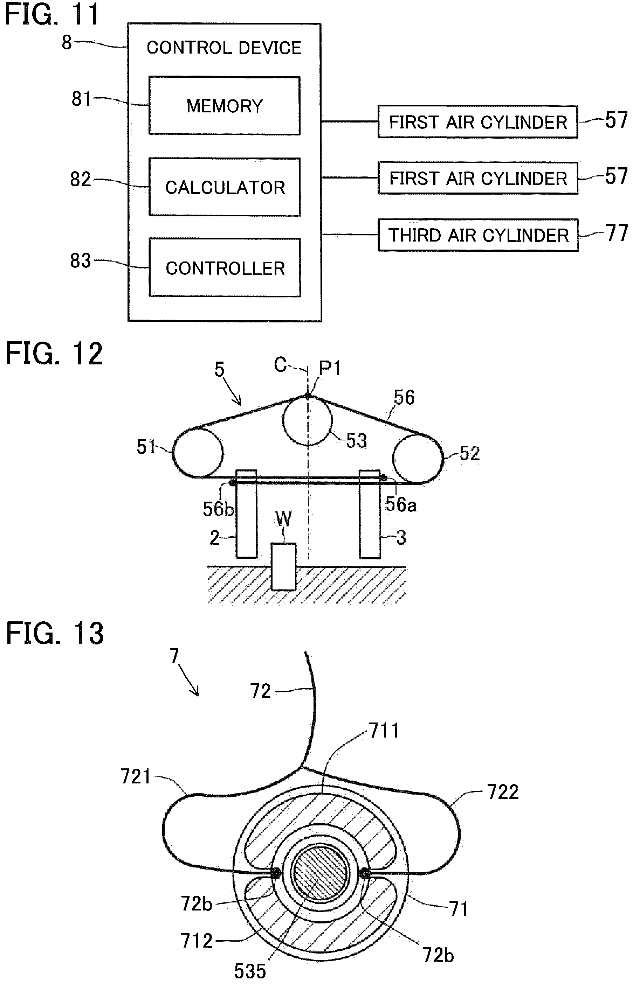

The control device 8 is a robot controller including a computer, such as a microcontroller. As shown in FIG. 11, the control device 8 includes a memory 81, a calculator 82, and a controller 83.

The memory 81 is, for example, a ROM and a RAM, and stores information such as basic programs for the robot controller and various fixed data items. The calculator 82 is, for example, a CPU, and reads and executes software such as the basic programs stored in the memory 81 to generate a control command for controlling various motions of the robot arm 10 and the robot hand 100. The controller 83 controls and drives the first air cylinders 57, a second air cylinder 58, and the third air cylinder 77 based on the control command generated by the calculator 82.

### <Motions>

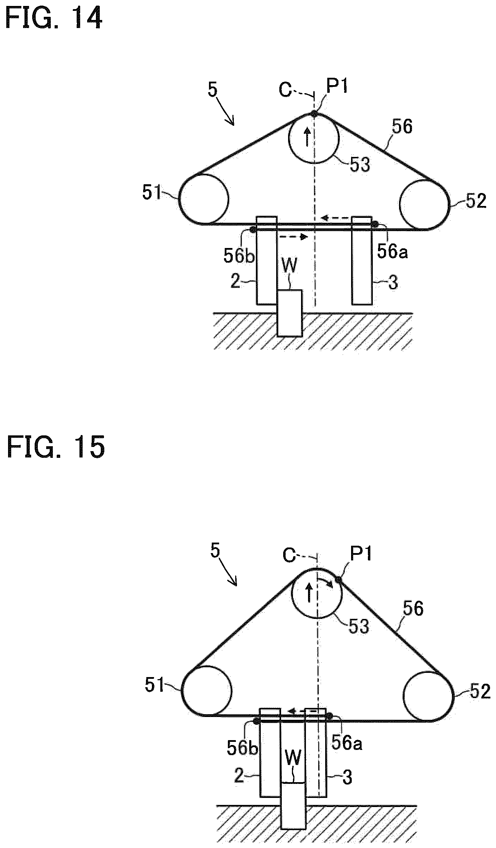

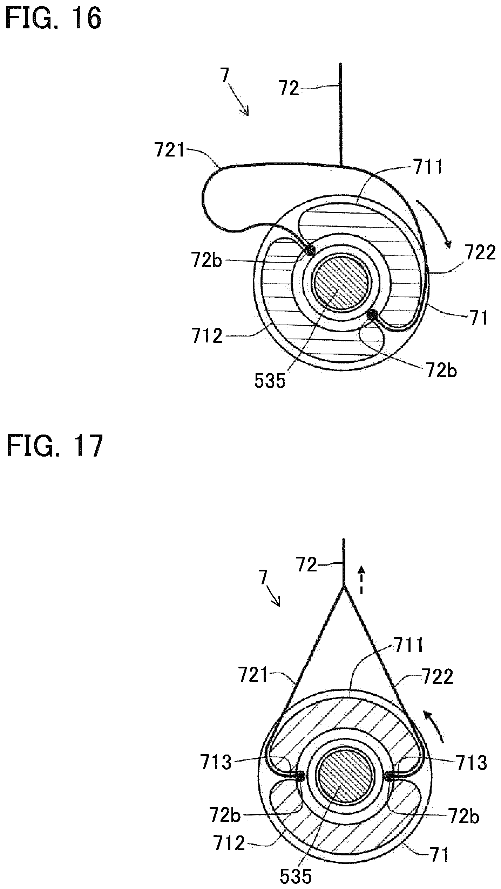

The motions of the hand 100 will be described below with reference to FIGS. 12 to 22. The robot hand 100 makes various motions including: a motion of bringing the first and second fingers 2 and 3 close to each other (closing the fingers) so that the fingers 2 and 3 grip a workpiece (this motion will be referred to as a "close-gripping motion"); a motion of moving the first and second fingers 2 and 3 away from each other (opening the fingers) so that the fingers 2 and 3 grip the workpiece (this motion will be referred to as an "open-gripping motion"); and a motion of moving the first and second fingers 2 and 3 to the center C of the movable range of the fingers 2 and 3 with the gap between the fingers 2 and 3 maintained (this motion will be referred to as a "centering motion"). FIGS. 12 to 21 (excluding FIGS. 15 and 16) show the first and second moving mechanisms 5 and 6 simplified for convenience's sake.

At the start of the close-gripping motion, the piston rods 571, 571 of the first air cylinders 57, 57 have moved inside (downward), and the piston rod 771 of the third air cylinder 77 has also moved inside. For the close-gripping motion, first, the robot arm 10 moves the hand 100 to the position of the workpiece W, which an object to grip. The workpiece W is placed not to move in the horizontal direction. The workpiece W is, for example, columnar or prismatic in shape. When the hand 100 moves to the position of the workpiece W, the fingers 2 and 3 are fully opened, and thus make no shake.

When the hand 100 has moved to the position of the workpiece W, the fingers 2 and 3 are located outside the workpiece W. In this state, as shown in FIG. 12, the center C of the movable range of the fingers 2 and 3 (may be hereinafter simply referred to as the "center C of the movable range") may be misaligned from the center of the workpiece W. That is, the center of the gap between the first and second fingers 2 and 3 (may be hereinafter simply referred to as the "center of the fingers 2 and 3") may be misaligned from the center of the workpiece W. In this example, the description will be made on the assumption that the center of the workpiece W is shifted toward the first finger 2.

At the start of the close-gripping motion, the third movable pulley 71 is in the first rotation position. As shown in FIG. 13, the third wire 72 is not taut but loose. In this state, the fixing part P1 is assumed to be at the top of the movable pulley 531 of the first movable pulley 53 for convenience's sake. At the start of the close-gripping motion, the center of the fingers 2 and 3 agrees with the center C of the movable range.

In this state, the first air cylinders 57, 57 are controlled by the control device 8, the piston rods 571, 571 move outside (upward), and the first movable pulley 53 rises. Then, as shown in FIG. 14, the tension of the first wire 56 generated by the rise of the first movable pulley 53 acts on the fingers 2 and 3, bringing the fingers 2 and 3 close to each other. That is, the fingers 2 and 3 move toward the workpiece W. The moving fingers 2 and 3 receive substantially the same resistance, and thus the amounts of movement of the fingers 2 and 3 are substantially the same. Thus, the first movable pulley 53 rises without rotating. Thereafter, one of the fingers 2 and 3, i.e., the first finger 2, touches the workpiece W and stops. The piston rods 571, 571 of the first air cylinders 57 keep moving outside at this time.

As shown in FIG. 15, the first movable pulley 53 keeps moving up although the first finger 2 has touched the workpiece W and stopped. This allows the second finger 3 to keep moving smoothly. When the first finger 2 touches the workpiece W and the resistance to the movement of the first finger 2 increases, the first wire 56 on the first movable pulley 53 moves from the first fixed pulley 51 toward the second fixed pulley 52 as the first movable pulley 53 moves up. The movement of the first wire 56 allows the movable pulley 531 to rotate. That is, the movable pulley 531 (the first movable pulley 53) moves up while rotating. The first wire 56 is fixed to the movable pulley 531, and thus the movable pulley 531 surely rotates as the first wire 56 moves. Thus, the tension of the first wire 56 acts solely on the second finger 3 receiving the smaller resistance when moving, and the second finger 3 alone keeps moving toward the workpiece W (toward the first finger 2). Thereafter, the second finger 3 touches the workpiece W and stops.

When the movable pulley 531 rotates as described above, the third movable pulley 71 of the first adjustment mechanism 7 also rotates in the same direction as the movable pulley 531. As shown in FIG. 16, when the third movable pulley 71 rotates, the third wire 72 is wound about the third movable pulley 71. Specifically, one of the two loose branches 721, 722 of the third wire 72 is wound about the barrel 711. That is, a loose part of the third wire 72 is wound about the third movable pulley 71. This lowers the resistance to the rotating third movable pulley 71 compared with, for example, when the piston rod 771 moves out of the third air cylinder 77 to strain the third wire 72. Note that the piston rod 771 is kept drawn inside the third air cylinder 77 at this time.

Thus, the first and second fingers 2 and 3 achieve the follow-gripping of the workpiece W, and the close-gripping motion is finished. The fingers 2 and 3 grip the workpiece W from outside. The follow-gripping is achieved smoothly although the center of the workpiece W is misaligned with the center C of the movable range when the hand 100 has moved to the position of the workpiece W. In addition, the third movable pulley 71 that winds the third wire 72 receives less rotational resistance as described above, making the follow-gripping smoother. After the close-gripping motion is finished, the robot arm 10 moves the hand 100 upward to move the workpiece W upward from the original position.

Next, the centering motion is performed. When the follow-gripping is done as described above, the center of the fingers 2 and 3 is misaligned with the center C of the movable range as shown in FIG. 15. Thus, the centering motion is performed.

For the centering motion, the control device 8 controls the third air cylinder 77 to move the piston rod 771 out of the cylinder. When the piston rod 771 moves outside, the third wire 72 is rewound from the third movable pulley 71, making the third wire 72 including the two branches 721, 722 taut as shown in FIG. 17. Specifically, the third wire 72 is rewound to the maximum from the third movable pulley 71, rotating the third movable pulley 71 back to the first rotation position. Then, the third wire 72 cannot be rewound anymore, and the piston rod 771 of the third air cylinder 77 stops moving outside.

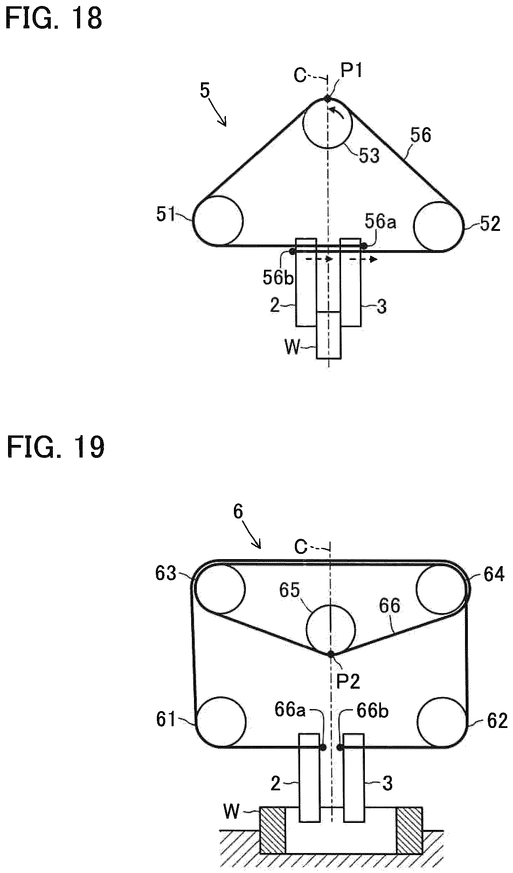

When the third movable pulley 71 rotates, the movable pulley 531 (the first movable pulley 53) rotates opposite to the direction of rotation for the close-gripping motion (the direction of rotation shown in FIG. 15) as shown in FIG. 18. Specifically, the movable pulley 531 reversely rotates and returns to the rotation position at which the fixing part P1 comes to the top (the position before the movable pulley 531 rotates for the "close-gripping motion"). Then, the first wire 56 moves, and the first and second fingers 2 and 3 move to the center C of the movable range with the gap between the fingers 2 and 3 maintained. That is, the first and second fingers 2 and 3 gripping the workpiece W move, and the center of the fingers 2 and 3 agrees with the center C of the movable range. Thus, the centering motion is finished. This allows the first and second fingers 2 and 3 to move to the center C of the movable range without position detection of the first and second fingers 2 and 3 using a sensor or any other devices. Although the centering motion of moving the fingers 2 and 3 to the center C of the movable range has been described in this example, the hand 100 can move the fingers 2 and 3 to any position in the moving direction and fix the fingers 2 and 3 at the position.

The open-gripping motion will be described below. At the start of the open-gripping motion, the piston rods 571, 571 of the first air cylinders 57, 57 have moved outside (upward), and the piston rod 771 of the third air cylinder 77 has moved inside. For the open-gripping motion, first, the robot arm 10 moves the hand 100 to the position of the workpiece W, which an object to grip. The workpiece W is placed not to move in the horizontal direction. The workpiece W is, for example, a cylindrical member having a round or rectangular space inside.

When the hand 100 has moved to the position of the workpiece W, the fingers 2 and 3 are located inside the workpiece W. In this state, as shown in FIG. 19, the center C of the movable range of the fingers 2 and 3 may be misaligned from the center of the workpiece W. That is, the center of the gap between the first and second fingers 2 and 3 may be misaligned from the center of the workpiece W. In this example, the description will be made on the assumption that the center of the workpiece W is shifted toward the second finger 3. The open-gripping motion also starts with the center of the gap between the first and second fingers 2 and 3 agrees with the center C of the movable range of the fingers 2 and 3.

At the start of the open-gripping motion, the third movable pulley 71 is in the first rotation position. Just like at the start of the close-gripping motion, the third wire 72 is not taut but loose (see FIG. 13). In this state, the fixing part P2 is assumed to be at the bottom of the movable pulley 653 of the second movable pulley 65 for convenience's sake. At the start of the open-gripping motion, the center of the fingers 2 and 3 agrees with the center C of the movable range.

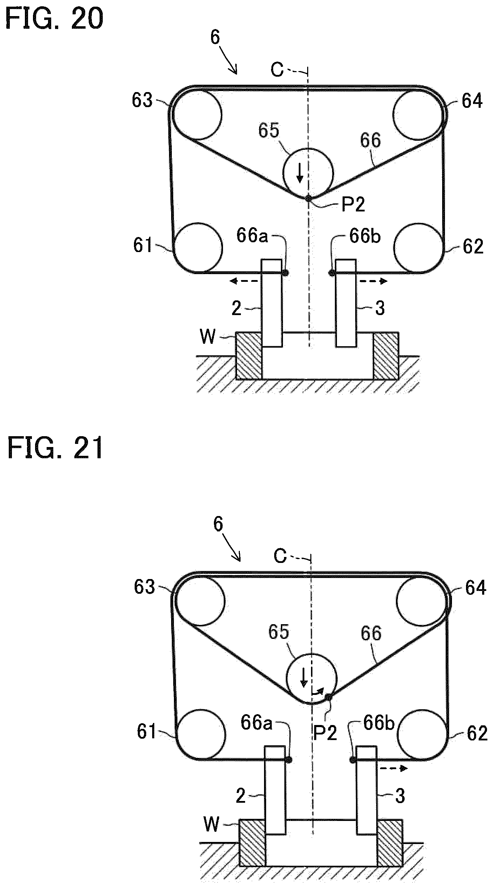

In this state, the first air cylinders 57, 57 are controlled by the control device 8, the piston rods 571, 571 move inside (downward), and the second movable pulley 65 descends. Then, as shown in FIG. 20, the tension of the second wire 66 generated by the descending of the second movable pulley 65 acts on the fingers 2 and 3, moving the fingers 2 and 3 away from each other. That is, the fingers 2 and 3 move toward the workpiece W. The moving fingers 2 and 3 receive substantially the same resistance, and thus the amounts of movement of the fingers 2 and 3 are substantially the same. Thus, the second movable pulley 65 descends without rotating. Thereafter, one of the fingers 2 and 3, i.e., the first finger 2, touches the workpiece W and stops. The piston rods 571, 571 of the first air cylinders 57, 57 keep moving inside at this time.

As shown in FIG. 21, the second movable pulley 65 keeps moving down although the first finger 2 has touched the workpiece W and stopped. This allows the second finger 3 to keep moving smoothly. When the first finger 2 touches the workpiece W and the resistance to the movement of the first finger 2 increases, the second wire 66 on the second movable pulley 65 moves from the fifth fixed pulley 63 (the third fixed pulley 61) toward the sixth fixed pulley 64 (the fourth fixed pulley 62) as the second movable pulley 65 moves down. The movement of the second wire 66 allows the movable pulley 653 to rotate. That is, the movable pulley 653 (the second movable pulley 65) moves down while rotating. The second wire 66 is fixed to the movable pulley 653, and thus the movable pulley 653 surely rotates as the second wire 66 moves. Thus, the tension of the second wire 66 acts solely on the second finger 3 receiving the smaller resistance when moving, and the second finger 3 alone keeps moving toward the workpiece W. Thereafter, the second finger 3 touches the workpiece W and stops.

Also in this case, when the movable pulley 653 rotates as described above, the third movable pulley 71 of the first adjustment mechanism 7 rotates in the same direction as the movable pulley 653. As shown in FIG. 16, when the third movable pulley 71 rotates, the third wire 72 is wound about the third movable pulley 71. Specifically, one of the two loose branches 721, 722 of the third wire 72 is wound about the barrel 711 as described for the close-gripping motion. This reduces the resistance to the rotating third movable pulley 71. Note that the piston rod 771 is kept drawn inside the third air cylinder 77 at this time.

Thus, the first and second fingers 2 and 3 achieve the follow-gripping of the workpiece W, and the open-gripping motion is finished. The fingers 2 and 3 grip the workpiece W from inside. The follow-gripping is achieved smoothly although the center of the workpiece W is misaligned with the center C of the movable range when the hand 100 has moved to the position of the workpiece W. In addition, the third movable pulley 71 that winds the third wire 72 receives less rotational resistance as described above, making the follow-gripping smoother. After the open-gripping motion is finished, the robot arm 10 moves the hand 100 upward to move the workpiece W upward from the original position.

Next, the centering motion is performed. When the follow-gripping is done as described above, the center of the fingers 2 and 3 is misaligned with the center C of the movable range as shown in FIG. 21. Thus, the centering motion is performed.

For the centering motion, the control device 8 controls the third air cylinder 77 to move the piston rod 771 out of the cylinder. When the piston rod 771 moves outside, the third wire 72 is rewound from the third movable pulley 71, making the third wire 72 including the two branches 721, 722 taut as shown in FIG. 17. Specifically, the third wire 72 is rewound to the maximum from the third movable pulley 71, rotating the third movable pulley 71 back to the first rotation position. Then, the third wire 72 cannot be rewound anymore, and the piston rod 771 of the third air cylinder 77 stops moving outside.

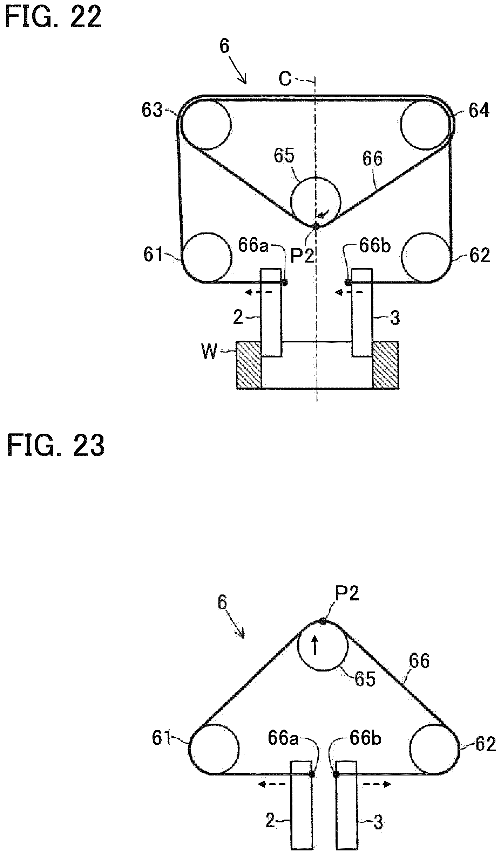

When the third movable pulley 71 rotates, the movable pulley 653 (the second movable pulley 65) rotates opposite to the direction of rotation for the "open-gripping motion" (the direction of rotation shown in FIG. 21) as shown in FIG. 22. Specifically, the movable pulley 653 reversely rotates and returns to the rotation position at which the fixing part P2 comes to the bottom (the position before the movable pulley 653 rotates for the "open-gripping motion"). Then, the second wire 66 moves, and the first and second fingers 2 and 3 move to the center C of the movable range with the gap between the fingers 2 and 3 maintained. That is, the first and second fingers 2 and 3 gripping the workpiece W move, and the center of the fingers 2 and 3 agrees with the center C of the movable range. Thus, the centering motion is finished. This allows the first and second fingers 2 and 3 to move to the center C of the movable range without position detection of the first and second fingers 2 and 3 using a sensor or any other devices.

As described above, the robot hand 100 includes the first moving mechanism 5 that brings the first and second fingers 2 and 3 close to each other in the predetermined moving direction so that the first and second fingers 2 and 3 grip the workpiece W. The first moving mechanism 5 includes the first movable pulley 53, the first wire 56 (the first cord-like member) that has two ends (the first end 56a and the second end 56b), one of which is connected to the first finger 2 and the other is connected to the second finger 3, and is wrapped around the first movable pulley 53, and the first air cylinders 57 (the first actuator) that move the first movable pulley 53. The first air cylinders 57 move the first movable pulley 53 so that the tension of the first wire 56 acts on the first and second fingers 2 and 3 to bring the first and second fingers 2 and 3 close to each other.

Specifically, the first moving mechanism 5 includes the first fixed pulley 51 arranged closer to the first finger 2 and the second fixed pulley 52 arranged closer to the second finger 3 in the moving direction. The first wire 56 is wrapped around the second fixed pulley 52, the first movable pulley 53, and the first fixed pulley 51 in this order as the first wire extends from the first finger 2 to the second finger 3.

In this configuration, the first wire 56 pulls and moves the first and second fingers 2 and 3 in accordance with the amount of movement of the first movable pulley 53 caused by the first air cylinders 57. Part of the first wire 56 extending from the first movable pulley 53 toward the first fixed pulley 51 is wrapped around the first fixed pulley 51 and connected to the second finger 3. Part of the first wire 56 extending from the first movable pulley 53 toward the second fixed pulley 52 is wrapped around the second fixed pulley 52 and connected to the first finger 2. The first fixed pulley 51 is arranged closer to the first finger 2 in the moving direction, and the second fixed pulley 52 is arranged closer to the second finger 3 in the moving direction. Thus, when pulled by the first wire 56, the first and second fingers 2 and 3 move in a direction approaching each other. This allows the first and second fingers 2 and 3 approach each other to grip the workpiece W from outside.

The amount of movement of the first finger 2 and the amount of movement of the second finger 3 in accordance with the amount of movement of the first movable pulley 53 are suitably adjusted based on a resistance to the movement of the first finger 2 and a resistance to the movement of the second finger 3. For example, when the first finger 2 touches the workpiece W and the resistance to the movement of the first finger 2 increases, the first finger 2 stops, and the amount of movement of the second finger 3 is suitably increased. This allows the second finger 3 to keep moving smoothly toward the workpiece W. Thus, the second finger 3 reaches the workpiece W to achieve smooth follow-gripping.

The follow-gripping is achieved smoothly although the center C of the movable range is misaligned with the center of the workpiece W, for example. Thus, accurate position detection of the workpiece W is no longer necessary when moving the robot hand 100 to the position of the workpiece W. This can reduce the load on the control.

The robot hand 100 includes the second moving mechanism 6 that moves the first and second fingers 2 and 3 away from each other in the moving direction so that the first and second fingers 2 and 3 grip the workpiece W. The second moving mechanism 6 includes the second movable pulley, the second wire 66 (the second cord-like member) that has two ends (the first end 66a and the second end 66b), one of which is connected to the first finger 2 and the other is connected to the second finger 3, and is wrapped around the second movable pulley 65, and the first air cylinders 57 (the second actuator) that move the second movable pulley 65. The first air cylinders 57 move the second movable pulley 65 so that the tension of the second wire 66 acts on the first and second fingers 2 and 3 to move the first and second fingers 2 and 3 away from each other.

Specifically, the second moving mechanism 6 includes the third fixed pulley 61 arranged closer to the first finger 2 and the fourth fixed pulley 62 arranged closer to the second finger 3 in the moving direction. The second wire 66 is wrapped around the third fixed pulley 61, the second movable pulley 65, and the fourth fixed pulley 62 in this order as the second wire extends from the first finger 2 to the second finger 3.

In this configuration, the second wire 66 pulls and moves the first and second fingers 2 and 3 in accordance with the amount of movement of the second movable pulley 65 caused by the first air cylinders 57. Part of the second wire 66 extending from the second movable pulley 65 toward the third fixed pulley 61 is wrapped around the third fixed pulley 61 and connected to the first finger 2. Part of the second wire 66 extending from the second movable pulley 65 toward the fourth fixed pulley 62 is wrapped around the fourth fixed pulley 62 and connected to the second finger 3. The third fixed pulley 61 is arranged closer to the first finger 2 in the moving direction, and the fourth fixed pulley 62 is arranged closer to the second finger 3 in the moving direction. Thus, when pulled by the second wire 66, the first and second fingers 2 and 3 move in a direction away from each other. This allows the first and second fingers 2 and 3 to move away from each other and grip the workpiece W from inside.

The amount of movement of the first finger 2 and the amount of movement of the second finger 3 in accordance with the amount of movement of the second movable pulley 65 are suitably adjusted based on a resistance to the movement of the first finger 2 and a resistance to the movement of the second finger 3. For example, when the first finger 2 touches the workpiece W and the resistance to the movement of the first finger 2 increases, the first finger 2 stops, and the amount of movement of the second finger 3 is suitably increased. This allows the second finger 3 to keep moving smoothly toward the workpiece W. Thus, the second finger 3 reaches the workpiece W to achieve smooth follow-gripping.

The first and second movable pulleys 53 and 65 of the robot hand 100 are configured to move integrally. Thus, the first movable pulley 53 that brings the first and second fingers 2 and 3 close to each other and the second movable pulley 65 that moves the first and second fingers 2 and 3 away from each other move in the opposite directions. The first air cylinders 57 (the first actuator) also serve as the second actuator and move the first and second movable pulleys 53 and 65.

In this configuration, the first air cylinders 57 that move the first movable pulley 53 also function as the second actuator that moves the second movable pulley 65. This can achieve both of the motion of bringing the first and second fingers 2 and 3 close to each other so that the fingers 2 and 3 grip the workpiece W (the close-gripping motion) and the motion of moving the first and second fingers 2 and 3 away from each other so that the fingers 2 and 3 grip the workpiece W (the open-gripping motion), and also can downsize the first and second moving mechanisms 5 and 6, and the robot hand 100 as well.

The robot hand 100 further includes the first adjustment mechanism 7 that rotates the first movable pulley 53 to move the first wire 56, moving the first and second fingers 2 and 3 with a gap between the fingers 2 and 3 maintained. The first and second movable pulleys 53 and 65 are configured to rotate integrally. The first adjustment mechanism 7 rotates the first and second movable pulleys 53 and 65 together to move the first and second wires 56 and 66, moving the first and second fingers 2 and 3 with a gap between the fingers 2 and 3 maintained.

This configuration can easily move the first and second fingers 2 and 3 gripping the workpiece W to any position within the hand 100, for example. Thus, for example, the first and second fingers 2 and 3 can move within the robot hand 100 taking workability of a next process into consideration. For a common differential gear mechanism that may deteriorate the gripping force when the gear rotates opposite to the gripping direction due to backlash or play of the gear, it is difficult to move the first and second fingers gripping the workpiece.

The first adjustment mechanism 7 of the robot hand 100 includes the third movable pulley 71, the third wire 72 (the third cord-like member), and the third air cylinder 77 (the third actuator). The third movable pulley 71 moves and rotates integrally with the first and second movable pulleys 53 and 65. The third wire 72 is connected to the third movable pulley 71 and wound about the third movable pulley 71 when the first and second movable pulleys 53 and 65 rotate. The third air cylinder 77 rewinds the third wire 72 wound about the third movable pulley 71 to rotate the first and second movable pulleys 53 and 65.

In this configuration, the third movable pulley 71 moves and rotates integrally with the first and second movable pulleys 53 and 65. Thus, simply rewinding the third wire 72 can rotate both of the first and second movable pulleys 53 and 65. This can downsize the robot hand 100.

In the robot hand 100, the first wire 56 is fixed to the first movable pulley 53, and the second wire 66 is fixed to the second movable pulley 65.

This configuration allows the first wire 56 to surely move without slipping as the first movable pulley 53 rotates and allows the second wire 66 to surely move without slipping as the second movable pulley 65 rotates. Thus, the first and second fingers 2 and 3 can accurately move with a gap between the fingers maintained.

The first adjustment mechanism 7 of the robot hand 100 is configured to rewind the third wire 72 to the maximum to set the third movable pulley 71 in the predetermined first rotation position and moves the first and second fingers 2 and 3 to the predetermined first position with a gap between the fingers maintained by setting the third movable pulley 71 in the first rotation position.

In this configuration, the third wire 72 is rewound to the maximum to set the third movable pulley 71 in the first rotation position, moving the first and second fingers 2 and 3 to the predetermined first position with the gap between the fingers maintained. When the predetermined first position is the center C of the movable range of the fingers 2 and 3, the first and second fingers 2 and 3 can smoothly and easily move to the center without detecting the amount of rewind of the third wire 72 with a sensor or any other devices.

The robot hand 100 uses the air cylinders 57, 58, and 77 as the first, second, and third actuators.

In this configuration, the robot hand 100 can be produced less expensively than when a motor (a servomotor), for example, is used. In particular, the air cylinder that can make a reciprocating motion is effectively used because the first and second movable pulleys 53 and 65 move up and down.

### Other Embodiments

The embodiment has been described above as an example of the disclosure of the present application. However, the present disclosure is not limited to this exemplary embodiment but is also applicable to other embodiments which are altered or substituted, to which other features are added, or from which some features are omitted, as needed. The components described in the embodiment may be combined to create a new embodiment. The components illustrated on the accompanying drawings and described in the detailed description include not only essential components that need to be used to overcome the problem, but also other unessential components that do not have to be used to overcome the problem. Therefore, such unessential components should not be taken for essential ones, simply because such unessential components are illustrated in the drawings or mentioned in the detailed description.

The second moving mechanism 6 of the embodiment may be omitted. Specifically, the robot hand 100 may only make the "close-gripping motion" as the gripping motion.

The first moving mechanism 5 of the embodiment may be omitted. Specifically, the robot hand 100 may only make the "open-gripping motion" as the gripping motion. In this case, the second adjustment mechanism is provided in place of the first adjustment mechanism 7. The second adjustment mechanism rotates the second movable pulley 65 to move the second wire 66 (the second cord-like member), moving the first and second fingers 2 and 3 with a gap between the fingers maintained.

When the robot hand has no first moving mechanism 5 and is configured to perform the "open-gripping motion" alone, the second moving mechanism 6 may have the structure shown in FIG. 23. Specifically, the second wire 66 has the first end 66a connected to the first finger 2 and the second end 66b connected to the second finger 3. The second wire 66 is wrapped around the third fixed pulley 61, the second movable pulley 65, and the fourth fixed pulley 64 in this order as the second wire extends from the first finger 2 to the second finger 3. When the second moving mechanism 6 is configured in this manner, the second movable pulley 65 moves upward, and the tension of the second wire 66 acts on the first and second fingers 2 and 3, moving the first and second fingers 2 and 3 away from each other.

The second adjustment mechanism may include a fourth movable pulley that moves and rotates integrally with the second movable pulley 65, a fourth wire (a fourth cord-like member) that is connected to the fourth movable pulley and wound about the fourth movable pulley when the second movable pulley 65 rotates, and a fourth air cylinder (a fourth actuator) that rewinds the fourth wire wound about the fourth movable pulley to rotate the second movable pulley 65.

The second adjustment mechanism is configured to rewind the fourth wire to the maximum to set the fourth movable pulley in a predetermined second rotation position and moves the first and second fingers 2 and 3 to a predetermined second position with a gap between the fingers maintained by setting the fourth movable pulley in the second rotation position.

At the start of the close-gripping motion and the open-gripping motion, the piston rod 771 has moved inside the third air cylinder 77 of the first adjustment mechanism 7 to loosen the third wire 72. In the present disclosure, however, the piston rod 771 may move out of the third air cylinder 77 to strain the third wire 72.

From the robot hand of the embodiment, the first adjustment mechanism 7 may be omitted, the second moving mechanism 6 and the first adjustment mechanism 7 may be omitted, or the first moving mechanism 5 and the first adjustment mechanism 7 may be omitted.

How the first and second wires 56 and 66 are wrapped around the pulleys is not limited to the examples described in the embodiment. Specifically, the wires may be wrapped in any way as long as the tensions of the first and second wires 56 and 66 act on the first and second fingers 2 and 3 when the first and second movable pulleys 53 and 65 move up and down.

The number of fixed pulleys constituting each of the first, second, third, fourth, fifth, and sixth fixed pulleys 51, 52, 61, 62, 63, and 64 and the number of movable pulleys constituting each of the first and second movable pulleys 53 and 65 are not limited to the numbers described in the embodiment. Basically, the number of turns of the wire increases as the number of fixed pulleys and movable pulleys increases. Thus, the amounts of movement of the first and second movable pulleys 53 and 65 required for moving the first and second fingers 2 and 3 can be reduced, making the robot hand 100 compact.

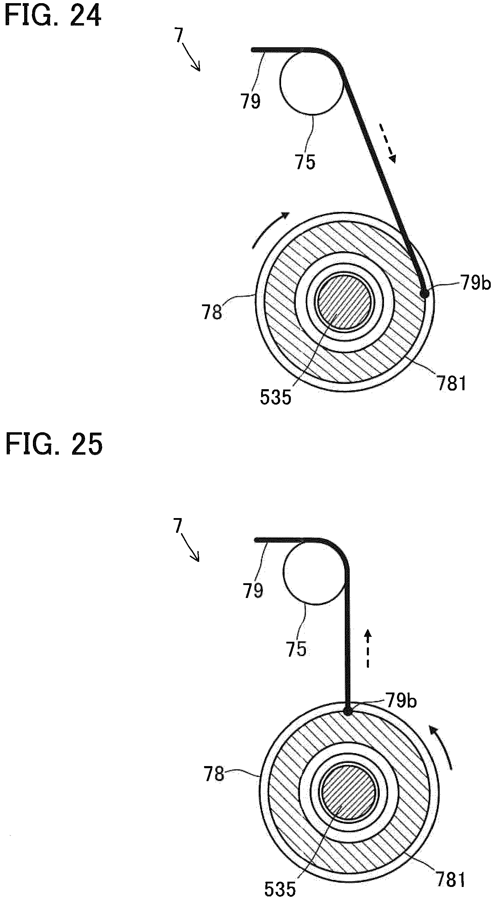

The third movable pulley and the third wire of the embodiment may be configured as described below. As shown in FIGS. 24 and 25, a third movable pulley 78 has an annular barrel 781. A second end 79b of a third wire 79 is connected to a predetermined position on an outer peripheral surface of the barrel 781. Although the third wire 72 and the third movable pulley 71 of the embodiment are connected at two points, the third movable pulley 78 and the third wire 79 of this variation are connected at one point. Although not shown, the third wire 79 is wrapped around a conversion pulley 75, which is a guide, and fixed to the wire attachment 76 via the movable pulley 74 connected to the third air cylinder 77 as described in the embodiment. Also in this case, the third movable pulley 78 rotates as the first and second movable pulleys 53 and 65 rotate (the state shown in FIG. 24) when the follow-gripping is performed by the "close-gripping motion" and the "open-gripping motion." Thus, the third wire 79 is wound about the barrel 781 of the third movable pulley 78. For the "centering motion," the third air cylinder 77 rewinds the third wire 79 to the maximum (the state shown in FIG. 25). That is, the point of connection between the third movable pulley 78 and the third wire 79 comes to the top. Thus, the third movable pulley 78 returns to the first rotation position, and the first and second movable pulleys 53 and 65 rotate. This centers the first and second fingers 2 and 3 in the same manner as in the embodiment.

Other components than the air cylinders may be used as the first, second, and third actuators of the embodiment. For example, a motor or a hydraulic cylinder can be used.

Although the wire has been used as the cord-like member in the embodiment, the cord-like member is not limited to the wire, and may be, for example, a fiber rope.

In the embodiment, the length of the wire wrapped around the first and second movable pulleys 53 and 65 varies depending on the vertical positions of the first and second movable pulleys 53 and 65. This may require the wire to be wrapped slightly loosely. In this case, the wire may possibly be detached from the fixed pulley or any other pulleys. Thus, for example, a tensioner that can absorb unnecessary looseness of the wire or a guide that avoids the wire from detaching from the pulleys may be provided.

### List of reference signs

- 1: base
- 10: robot arm
- 100: robot hand
- 11: front plate
- 12: rear plate
- 13: top plate
- 14: intermediate plate
- 2: first finger
- 21: basal part
- 22: finger body
- 3: second finger
- 31: basal part
- 32: finger body
- 4: support
- 41: guide rail
- 42: first guide block
- 421: wire attachment
- 422: first slit
- 423: second slit
- 425: finger attachment
- 43: second guide block
- 431: wire attachment
- 432: wire attachment
- 433: first slit
- 434: second slit
- 435: finger attachment
- 5: first moving mechanism
- 51: first fixed pulley
- 511: fixed pulley
- 512: fixed pulley
- 52: second fixed pulley
- 521: fixed pulley
- 522: fixed pulley
- 53: first movable pulley
- 531: movable pulley
- 532: movable pulley
- 533: movable pulley
- 535: common shaft
- 56: first wire
- 56a: first end
- 56b: second end
- 57: first air cylinder
- 571: piston rods
- 572: connecting member
- 58: second air cylinder
- 6: second moving mechanism
- 61: third fixed pulley
- 62: fourth fixed pulley
- 63: fifth fixed pulley
- 631: fixed pulley
- 632: fixed pulley
- 633: fixed pulley
- 64: sixth fixed pulley
- 641: fixed pulley
- 642: fixed pulley
- 643: fixed pulley
- 645: common shaft
- 65: second movable pulley
- 651: movable pulley
- 652: movable pulley
- 653: movable pulley
- 655: common shaft
- 66: second wire
- 66a: first end
- 66b: second end
- 7: first adjustment mechanism
- 71: third movable pulley
- 711: barrel
- 712: barrel
- 713: gap
- 72: third wire
- 721: branches
- 722: branches
- 72a: first end
- 72b: second end
- 73: guide
- 74: movable pulley
- 741: shaft
- 75: conversion pulley
- 76: wire attachment
- 77: third air cylinder
- 771: piston rod
- 772: connecting member
- 78: third movable pulley
- 781: annular barrel
- 79: third wire
- 79b: second end
- 8: control device
- 81: memory
- 82: calculator
- 83: controller

- C: Center
- P1: fixing parts
- P2: fixing parts
- W: Workpiece

## Claims

1. A robot hand (100), comprising: a first finger (2) and a second finger (3); a support (4) has a guide rail (41) that supports the first finger (2) and the second finger (3) to be slidable in a moving direction which is an extending direction of the guide rail (41); and
a first moving mechanism (5) that brings the first and second fingers (2, 3) close to each other in the moving direction so that the first and second fingers (2, 3) grip a workpiece (W), wherein
the first moving mechanism (5) includes
a first movable pulley (53),
a first cord-like (56) member that has two ends (56a, 56b), one of which is connected to the first finger (2) and the other is connected to the second finger (3), and is wrapped around the first movable pulley (53), and
a first actuator (57) that moves the first movable pulley (53), and
the first actuator (57) moves the first movable pulley (53) so that a tension of the first cord-like member (56) acts on the first and second fingers (2, 3) to bring the first and second fingers (2, 3) close to each other, **characterized in that** a first adjustment mechanism (7) that rotates the first movable pulley (53) to move the first cord-like member (56), and the first cord-like member (56) is fixed to the first movable pulley (53).

2. The robot hand of claim 1, **characterized in that** the first moving mechanism (5) includes a first fixed pulley (51) arranged closer to the first finger (2) and a second fixed pulley (52) arranged closer to the second finger (3) in the moving direction, and
the first cord-like member (56) is wrapped around the second fixed pulley (52), the first movable pulley (53), and the first fixed pulley (51) in this order as the first cord-like member (56) extends from the first finger (2) to the second finger (3).

3. The robot hand of claim 2, **characterized in that** the first adjustment mechanism (7) includes
a third movable pulley (71) that moves and rotates integrally with the first movable pulley (53),
a third cord-like member (79) that is connected to the third movable pulley (71) and wound about the third movable pulley (71) when the first movable pulley (53) rotates, and
a third actuator (77) that rewinds the third cord-like member (79) wound about the third movable pulley (71) to rotate the first movable pulley (53).

4. The robot hand of claim 2 or 3, **characterized in that** the first adjustment mechanism (57) is configured to rewind the third cord-like member (79) to the maximum to set the third movable pulley (71) in a predetermined first rotation position and moves the first and second fingers (2, 3) to a predetermined first position with a gap between the first and second fingers (2, 3) maintained by setting the third movable pulley (71) in the first rotation position.

5. The robot hand of claim 1 or 2, **characterized in that** a second moving
mechanism (6) that moves the first and second fingers (2, 3) away from each other in the moving direction so that the first and second fingers (2, 3) grip the workpiece (W), wherein
the second moving mechanism (6) includes
a third fixed pulley (61) arranged closer to the first finger (2) and a fourth fixed pulley (62) arranged closer to the second finger (3) in the moving direction,
a second movable pulley (65),
a second cord-like member (66) that has two ends (66a, 66b), one of which is connected to the first finger (2) and the other is connected to the second finger (2), and is wrapped around the third fixed pulley (61), the fourth fixed pulley (62), and the second movable pulley (65), and
a second actuator (58) that moves the second movable pulley (65),
the second cord-like member (66) is wrapped around the third fixed pulley (61), the second movable pulley (65), and the fourth fixed pulley (62) in this order as the second cord-like member (66) extends from the first finger (2) to the second finger (3), and
the second actuator (58) moves the second movable pulley (65) so that a tension of the second cord-like member (58) acts on the first and second fingers (2, 3) to move the first and second fingers (2, 3) away from each other.

6. The robot hand of claim 5, **characterized in that** the first and second movable pulleys (53, 65)are configured to rotate and move integrally,
a moving direction of the first and second movable pulleys (53, 65) when the first movable pulley (53) brings the first and second fingers (2, 3) close to each other is opposite to a moving direction of the first and second movable pulleys (53, 65) when the second movable pulley (65) brings the first and second fingers (2, 3) away from each other, and
the first actuator (57) also functions as the second actuator (58) and moves the first and second movable pulleys (53, 65).

7. The robot hand of claim 6, **characterized in that** a first adjustment mechanism (7) that rotates the first movable pulley (53) to move the first cord-like member (56), moving the first and second fingers (2, 3) with a gap between the first and second fingers (2, 3) maintained, wherein
the first and second movable pulleys (53, 65) are configured to rotate integrally, and
the first adjustment mechanism (7) rotates the first and second movable pulleys (53, 65) together to move the first and second cord-like members (56, 66), moving the first and second fingers (2, 3) with a gap between the first and second fingers (2, 3) maintained.

8. The robot hand of claim 7, **characterized in that** the first adjustment mechanism (7) includes
a third movable pulley (71) that moves and rotates integrally with the first and second movable pulleys (53, 65),
a third cord-like member (72) that is connected to the third movable pulley (71) and wound about the third movable pulley (71) when the first and second movable pulleys rotate (53, 65), and
a third actuator (77) that rewinds the third cord-like member (72) wound about the third movable pulley (71) to rotate the first and second movable pulleys (53, 65).

9. The robot hand of claim 7 or 8, **characterized in that** the first cord-like member (56) is fixed to the first movable pulley (53), and
the second cord-like (66) member is fixed to the second movable pulley (65).

10. The robot hand of claim 9, **characterized in that** the first adjustment mechanism (7) is configured to rewind the third cord-like member (72) to the maximum to set the third movable pulley (71) in a predetermined first rotation position and moves the first and second fingers (2, 3) to a predetermined first position with a gap between the first and second fingers (2, 3) maintained by setting the third movable pulley (71) in the first rotation position.

11. A robot hand, comprising: a first finger and a second finger (2, 3);
a support (4) has a guide rail (41) that supports the first finger (2) and the second finger (3) to be slidable in a moving direction which is an extending direction of the guide rail (41); and
a second moving mechanism (6) that moves the first and second fingers (2, 3) away from each other in a predetermined moving direction so that the first and second fingers (2, 3) grip a workpiece (W), wherein
the second moving mechanism (6) includes
a second movable pulley (65),
a second cord-like member (66) that has two ends (66a, 66b), one of which is connected to the first finger (2) and the other is connected to the second finger (3), and is wrapped around the second movable pulley (65), and a second actuator (58) that moves the second movable pulley (65), and the second actuator (58) moves the second movable pulley (65) so that a tension of the second cord-like member (66) acts on the first and second fingers (2, 3) to move the first and second fingers (2, 3) away from each other,
**characterized in that** a second adjustment mechanism that rotates the second movable pulley (65) to move the second cord-like member (66), and the second cord-like member (66) is fixed to the second movable pulley (65).

12. The robot hand of claim 11, **characterized in that** the second moving mechanism (6) includes a third fixed pulley (61) arranged closer to the first finger (2) and a fourth fixed pulley (62) arranged closer to the second finger (3) in the moving direction, and
the second cord-like member (66) is wrapped around the third fixed pulley (61), the second movable pulley (65), and the fourth fixed pulley (62) in this order as the second cord-like member (66) extends from the first finger (2) to the second finger (3).

13. The robot hand of claim 12, **characterized in that** the second adjustment mechanism includes
a fourth movable pulley (74) that moves and rotates integrally with the second movable pulley (65),
a fourth cord-like member (79) that is connected to the fourth movable pulley and wound about the fourth movable pulley when the second movable pulley (65) rotates, and
a fourth actuator that rewinds the fourth cord-like member (79) wound about the fourth movable pulley to rotate the second movable pulley (65).

14. The robot hand of claim 12 or 13, **characterized in that** the second adjustment mechanism is configured to rewind the fourth cord-like member (79) to the maximum to set the fourth movable pulley in a predetermined second rotation position and moves the first and second fingers (2, 3) to a predetermined second position with a gap between the first and second fingers (2, 3) maintained by setting the fourth movable pulley in the second rotation position.

## Patentansprüche

1. Roboterhand (100), Folgendes umfassend:
Einen ersten Finger (2) und einen zweiten Finger (3);
eine Halterung (4) mit einer Führungsschiene (41), in der der erste Finger (2) und der zweite Finger (3) in eine Bewegungsrichtung verschiebbar gelagert sind, die einer Verlaufsrichtung der Führungsschiene (41) entspricht; und
einen ersten Bewegungsmechanismus (5), mit dem der erste und der zweite Finger (2, 3) in der Bewegungsrichtung aufeinander zu bewegt werden, sodass der erste und der zweite Finger (2, 3) ein Werkstück (W) greifen, wobei der erste Bewegungsmechanismus (5) Folgendes umfasst:
eine erste bewegliche Riemenscheibe (53),
ein erstes seilartiges Element (56) mit zwei Enden (56a, 56b), von denen eines mit dem ersten Finger (2) und das andere mit dem zweiten Finger (3) verbunden ist, und das um die erste bewegliche Riemenscheibe (53) herum gewickelt ist, und
ein erstes Stellglied (57), das die erste bewegliche Riemenscheibe (53) bewegt, und
wobei das erste Stellglied (57) die erste bewegliche Riemenscheibe (53) derart bewegt, dass eine Spannung des ersten seilartigen Elements (56) auf den ersten und zweiten Finger (2, 3) wirkt, um den ersten und zweiten Finger (2, 3) aufeinander zu bewegen, **dadurch gekennzeichnet, dass** ein erster Einstellmechanismus (7), der die erste bewegliche Riemenscheibe (53) dreht, um das erste seilartige Element (56) zu bewegen, und das erste seilartige Element (56) an der ersten beweglichen Riemenscheibe (53) befestigt sind.

2. Roboterhand nach Anspruch 1, **dadurch gekennzeichnet, dass** der erste Bewegungsmechanismus (5) eine erste feststehende Riemenscheibe (51), die näher am ersten Finger (2) angeordnet ist, und eine zweite feststehende Riemenscheibe (52), die näher am zweiten Finger (3) angeordnet ist, jeweils auf die Bewegungsrichtung bezogen, aufweist, und
dass bei Verlauf des ersten seilartigen Elements (56) vom ersten Finger (2) zum zweiten Finger (3) das erste seilartige Element (56) um die zweite feststehende Riemenscheibe (52), die erste bewegliche Riemenscheibe (53) und die erste feststehende Riemenscheibe (51) (in dieser Reihenfolge) herumgewickelt wird.

3. Roboterhand nach Anspruch 2, **dadurch gekennzeichnet, dass** der erste Einstellmechanismus (7) Folgendes umfasst:
Eine dritte bewegliche Riemenscheibe (71), die sich zusammen mit der ersten beweglichen Riemenscheibe (53) bewegt und dreht,
ein drittes seilartiges Element (79), das mit der dritten beweglichen Riemenscheibe (71) verbunden ist und das bei Drehung der ersten bewegliche Riemenscheibe (53) um die dritte bewegliche Riemenscheibe (71) herum gewickelt wird, und
ein drittes Stellglied (77), das das um die dritte bewegliche Riemenscheibe (71) herum gewickelte dritte seilartige Element (79) zurückwickelt, um die erste bewegliche Riemenscheibe (53) zu drehen.

4. Roboterhand nach Anspruch 2 oder 3, **dadurch gekennzeichnet, dass** der erste Einstellmechanismus (57) konfiguriert ist, um das dritte seilartige Element (79) maximal aufzuwickeln, um so die dritte bewegliche Riemenscheibe (71) in eine vorbestimmte erste Drehposition zu bringen, und den ersten und den zweiten Finger (2, 3) in eine vorbestimmte erste Position zu bewegen, wobei ein Spalt zwischen dem ersten und zweiten Finger (2, 3) durch Versetzen der dritten beweglichen Riemenscheibe (71) in die erste Drehposition beibehalten wird.

5. Roboterhand nach Anspruch 1 oder 2, **dadurch gekennzeichnet, dass** ein zweiter Bewegungsmechanismus (6), der den ersten und den zweiten Finger (2, 3) in der Bewegungsrichtung voneinander weg bewegt, so dass der erste und der zweite Finger (2, 3) das Werkstück (W) greifen, wobei
der zweite Bewegungsmechanismus (6) Folgendes umfasst:
eine dritte feststehende Riemenscheibe (61), die näher am ersten Finger (2) angeordnet ist,
und eine vierte feststehende Riemenscheibe (62), die näher am zweiten Finger (3) angeordnet ist, jeweils auf die Bewegungsrichtung bezogen,
eine zweite bewegliche Riemenscheibe (65),
ein zweites seilartiges Element ( 66) mit zwei Enden (66a, 66b), von denen das eine mit dem ersten Finger (2) und das andere mit dem zweiten Finger (2) verbunden ist, und das um die dritte feststehende Riemenscheibe (61), die vierte feststehende Riemenscheibe (62) und die zweite bewegliche Riemenscheibe (65) gewickelt ist, und
ein zweites Stellglied (58), das die zweite bewegliche Riemenscheibe (65) bewegt,
wobei das zweite seilartige Element (66) bei Verlauf des zweiten seilartigen Elements (66) vom ersten Finger (2) zum zweiten Finger (3) jeweils um die dritte feststehende Riemenscheibe (61), die zweite bewegliche Riemenscheibe (65) und die vierte feststehende Riemenscheibe (62) (in dieser Reihenfolge) gewickelt wird, und
das zweite Stellglied (58) die zweite bewegliche Riemenscheibe (65) bewegt, sodass eine Spannung des zweiten seilartigen Elements (58) auf den ersten und den zweiten Finger (2, 3) wirkt, um den ersten und den zweiten Finger (2, 3) voneinander weg zu bewegen.

6. Roboterhand nach Anspruch 5, **dadurch gekennzeichnet, dass** die erste und die zweite bewegliche Riemenscheibe (53, 65) derart konfiguriert sind, dass sie sich gemeinsam drehen und bewegen,
eine Bewegungsrichtung der ersten und der zweiten beweglichen Riemenscheibe (53, 65), wenn die erste bewegliche Riemenscheibe (53) den ersten und den zweiten Finger (2, 3) aufeinander zu bewegt, entgegengesetzt zu einer Bewegungsrichtung der ersten und der zweiten beweglichen Riemenscheibe (53, 65) ist, wenn die zweite bewegliche Riemenscheibe (65) den ersten und den zweiten Finger (2, 3) voneinander weg bewegt, und
das erste Stellglied (57) auch als das zweite Stellglied (58) fungiert und die erste und die zweite bewegliche Riemenscheibe (53, 65) bewegt.

7. Roboterhand nach Anspruch 6, **dadurch gekennzeichnet, dass** ein erster Einstellmechanismus (7), der die erste bewegliche Riemenscheibe (53) dreht, um das erste seilartige Element (56) zu bewegen, wobei der erste und der zweite Finger (2, 3) unter Beibehaltung eines Spalts zwischen dem ersten und dem zweiten Finger (2, 3) bewegt werden, wobei
die erste und die zweite bewegliche Riemenscheibe (53, 65) derart konfiguriert sind, dass sie sich gemeinsam drehen, und
der erste Einstellmechanismus (7) die erste und die zweite bewegliche Riemenscheibe (53, 65) zusammen dreht, um das erste und das zweite seilartige Element (56, 66) zu bewegen, wodurch der erste und der zweite Finger (2, 3) unter Beibehaltung eines Spalts zwischen dem ersten und dem zweiten Finger (2, 3) bewegt werden.

8. Roboterhand nach Anspruch 7, **dadurch gekennzeichnet, dass** der erste Einstellmechanismus (7) Folgendes umfasst
eine dritte bewegliche Riemenscheibe (71), die sich zusammen mit der ersten und der zweiten beweglichen Riemenscheibe (53, 65) bewegt und dreht,
ein drittes seilartiges Element (72), das mit der dritten beweglichen Riemenscheibe (71) verbunden ist und das bei Drehung der ersten und der zweiten beweglichen Riemenscheibe (53, 65) um die dritte bewegliche Riemenscheibe (71) gewickelt wird, und
ein drittes Stellglied (77), das das um die dritte bewegliche Riemenscheibe (71) herum gewickelte dritte seilartige Element (72) zurückwickelt, um die erste und zweite bewegliche Riemenscheibe (53, 65) zu drehen.

9. Roboterhand nach Anspruch 7 oder 8, **dadurch gekennzeichnet, dass** das erste seilartige Element (56) an der ersten beweglichen Riemenscheibe (53) befestigt ist und das zweite seilartige Element (66) an der zweiten beweglichen Riemenscheibe (65) befestigt ist.

10. Roboterhand nach Anspruch 9, **dadurch gekennzeichnet, dass** der erste Einstellmechanismus (7) konfiguriert ist, um das dritte seilartige Element (72) maximal zurückzuwickeln, um die dritte bewegliche Riemenscheibe (71) in eine vorbestimmte erste Drehposition zu bringen, und den ersten und den zweiten Finger (2, 3) in eine vorbestimmte erste Position zu bewegen, wobei ein Spalt zwischen dem ersten und dem zweiten Finger (2, 3) durch Versetzen der dritten beweglichen Riemenscheibe (71) in die erste Drehposition beibehalten wird.

11. Roboterhand, Folgendes umfassend:
Einen ersten Finger (2) und einen zweiten Finger (3);
eine Halterung (4) mit einer Führungsschiene (41), in der der erste Finger (2) und der zweite Finger (3) in eine Bewegungsrichtung verschiebbar gelagert sind, die einer Erstreckungsrichtung der Führungsschiene (41) entspricht; und
einen zweiten Bewegungsmechanismus (6), mit dem der erste und der zweite Finger (2, 3) in der Bewegungsrichtung voneinander weg bewegt werden, sodass der erste und der zweite Finger (2, 3) ein Werkstück (W) greifen, wobei
der zweite Bewegungsmechanismus (6) Folgendes umfasst:
eine zweite bewegliche Riemenscheibe (65),
ein zweites seilartiges Element (65) mit zwei Enden (66a, 66b), von denen eines mit dem ersten Finger (2) und das andere mit dem zweiten Finger (3) verbunden ist, und das um die zweite bewegliche Riemenscheibe (65) herum gewickelt ist, und
ein zweites Stellglied (58), das die zweite bewegliche Riemenscheibe (65) bewegt, und
wobei das zweite Stellglied (58) die zweite bewegliche Riemenscheibe (65) derart bewegt, dass eine Spannung des zweiten seilartigen Elements (66) auf den ersten und zweiten Finger (2, 3) wirkt, um den ersten und zweiten Finger (2, 3) voneinander weg zu bewegen, **dadurch gekennzeichnet, dass** ein zweiter Einstellmechanismus, der die zweite bewegliche Riemenscheibe (65) dreht, um das zweite seilartige Element (66) zu bewegen, und das zweite seilartige Element (66) an der zweiten beweglichen Riemenscheibe (65) befestigt sind.

12. Roboterhand nach Anspruch 11, **dadurch gekennzeichnet, dass** der zweite Bewegungsmechanismus (6) eine dritte feststehende Riemenscheibe (61), die näher am ersten Finger (2) angeordnet ist, und eine vierte feststehende Riemenscheibe (62), die näher am zweiten Finger (3) in Bewegungsrichtung angeordnet ist, aufweist, und
das zweite seilartige Element (66) bei Verlauf des zweiten seilartigen Elements (66) vom ersten Finger (2) zum zweiten Finger (3) um die dritte feststehende Riemenscheibe (61), die zweite bewegliche Riemenscheibe (65) und die vierte feststehende Riemenscheibe (62) (jeweils in dieser Reihenfolge) gewickelt wird.

13. Roboterhand nach Anspruch 12, **dadurch gekennzeichnet, dass** der zweite Einstellmechanismus Folgendes umfasst:
eine vierte bewegliche Riemenscheibe (74), die sich zusammen mit der zweiten beweglichen Riemenscheibe (65) bewegt und dreht,
ein viertes seilartiges Element (79), das mit der vierten beweglichen Riemenscheibe verbunden ist und das bei Drehung der zweiten beweglichen Riemenscheibe (65) um die vierte bewegliche Riemenscheibe gewickelt wird, und
ein viertes Stellglied, das das um die vierte bewegliche Riemenscheibe gewickelte vierte seilartige Element (79) zurückwickelt, um die zweite bewegliche Riemenscheibe (65) zu drehen.

14. Roboterhand nach Anspruch 12 oder 13, **dadurch gekennzeichnet, dass** der zweite Einstellmechanismus konfiguriert ist, um das vierte seilartige Element (79) maximal zurückzuwickeln, um die vierte bewegliche Riemenscheibe in eine vorbestimmte zweite Drehposition zu bringen, und den ersten und den zweiten Finger (2, 3) in eine vorbestimmte zweite Position zu bewegen, wobei ein Spalt zwischen dem ersten und dem zweiten Finger (2, 3) durch Versetzen der vierten beweglichen Riemenscheibe in die zweite Drehposition beibehalten wird.

## Revendications

1. Main de robot (100) comprenant : un premier doigt (2) et un second doigt (3) ; un support (4) a un rail de guidage (41) qui supporte le premier doigt (2) et le second doigt (3) pour pouvoir coulisser dans une direction de déplacement qui est une direction d'extension du rail de guidage (41) ; et
un premier mécanisme de déplacement (5) qui amène les premier et second doigts (2, 3) à se rapprocher dans la direction de déplacement de sorte que les premier et second doigts (2, 3) saisissent une pièce à usiner (W), dans laquelle :
le premier mécanisme de déplacement (5) comprend :
une première poulie mobile (53),
un premier élément en forme de corde (56) qui a deux extrémités (56a, 56b), dont l'une est raccordée au premier doigt (2) et dont l'autre est raccordée au second doigt (3) et est enroulé autour de la première poulie mobile (53), et
un premier actionneur (57) qui déplace la première poulie mobile (53), et
le premier actionneur (57) déplace la première poulie mobile (53) de sorte qu'une tension du premier élément en forme de corde (56) agit sur les premier et second doigts (2, 3) afin d'amener les premier et second doigts (2, 3) à se rapprocher, **caractérisée en ce qu'**un premier mécanisme de réglage (7) fait tourner la première poulie mobile (53) pour déplacer le premier élément en forme de corde (56), et le premier élément en forme de corde (56) est fixé à la première poulie mobile (53).

2. Main de robot selon la revendication 1, **caractérisée en ce que** le premier mécanisme de déplacement (5) comprend une première poulie fixe (51) agencée plus à proximité du premier doigt (2) et une deuxième poulie fixe (52) agencée plus à proximité du second doigt (3) dans la direction de déplacement, et
le premier élément en forme de corde (56) est enroulé autour de la deuxième poulie fixe (52), de la première poulie mobile (53) et de la première poulie fixe (51) dans cet ordre, étant donné que le premier élément en forme de corde (56) s'étend à partir du premier doigt (2) jusqu'au second doigt (3).

3. Main de robot selon la revendication 2, **caractérisée en ce que** le premier mécanisme de réglage (7) comprend :
une troisième poulie mobile (71) qui se déplace et tourne de manière solidaire avec la première poulie mobile (53),
un troisième élément en forme de corde (79) qui est raccordé à la troisième poulie mobile (71) et enroulé autour de la troisième poulie mobile (71) lorsque la première poulie mobile (53) tourne, et
un troisième actionneur (77) qui rembobine le troisième élément en forme de corde (79) enroulé autour de la troisième poulie mobile (71) pour faire tourner la première poulie mobile (53).

4. Main de robot selon la revendication 2 ou 3, **caractérisée en ce que** le premier mécanisme de réglage (57) est configuré pour rembobiner le troisième élément en forme de corde (79) au maximum pour placer la troisième poulie mobile (71) dans une première position de rotation prédéterminée et déplace les premier et second doigts (2, 3) dans la première position prédéterminée avec un interstice entre les premier et second doigts (2, 3) maintenu en plaçant la troisième poulie mobile (71) dans la première position de rotation.

5. Main de robot selon la revendication 1 ou 2, **caractérisée en ce qu'**un second mécanisme de déplacement (6) qui déplace les premier et second doigts (2, 3) à l'opposé l'un de l'autre dans la direction de déplacement de sorte que les premier et second doigts (2, 3) saisissent la pièce à usiner (W), dans laquelle :
le second mécanisme de déplacement (6) comprend :
une troisième poulie fixe (61) agencée plus à proximité du premier doigt (2) et une quatrième poulie fixe (62) agencée plus à proximité du second doigt (3) dans la direction de déplacement,
une deuxième poulie fixe (65),
un deuxième élément en forme de corde (66) qui a deux extrémités (66a, 66b), dont l'une est raccordée au premier doigt (2) et dont l'autre est raccordée au second doigt (2) et est enroulé autour de la troisième poulie fixe (61), de la quatrième poulie fixe (62) et de la deuxième poulie mobile (65), et
un deuxième actionneur (58) qui déplace la deuxième poulie mobile (65),
le deuxième élément en forme de corde (66) est enroulé autour de la troisième poulie fixe (61), de la deuxième poulie mobile (65) et de la quatrième poulie fixe (62) dans cet ordre étant donné que le deuxième élément en forme de corde (66) s'étend à partir du premier doigt (2) au second doigt (3), et
le deuxième actionneur (58) déplace la deuxième poulie mobile (65) de sorte qu'une tension du deuxième élément en forme de corde (58) agit sur les premier et second doigts (2, 3) pour déplacer les premier et second doigts (2,3) à l'opposé l'un de l'autre.

6. Main de robot selon la revendication 5, **caractérisée en ce que** les première et deuxième poulies mobiles (53, 65) sont configurées pour tourner et se déplacer de manière solidaire,
une direction de déplacement des première et deuxième poulies mobiles (53, 65), lorsque la première poulie mobile (53) amène les premier et second doigts (2, 3) à se rapprocher, est opposée à une direction de déplacement des première et deuxième poulies mobiles (53, 65) lorsque la deuxième poulie mobile (65) amène les premier et second doigts (2, 3) à l'opposé l'un de l'autre, et
le premier actionneur (57) sert également de deuxième actionneur (58) et déplace les première et deuxième poulies mobiles (53, 65).

7. Main de robot selon la revendication 6, **caractérisée en ce qu'**un premier mécanisme de réglage (7) qui fait tourner la première poulie mobile (53) pour déplacer le premier élément en forme de corde (56), déplaçant les premier et second doigts (2, 3) avec un interstice entre les premier et second doigts (2, 3) maintenu, dans laquelle :
les première et deuxième poulies mobiles (53, 65) sont configurées pour tourner de manière solidaire, et
le premier mécanisme de réglage (7) fait tourner les première et deuxième poulies mobiles (53, 65) ensemble pour déplacer les premier et deuxième éléments en forme de corde (56, 66), déplaçant les premier et second doigts (2, 3) avec un interstice entre les premier et second doigts (2, 3) maintenu.

8. Main de robot selon la revendication 7, **caractérisée en ce que** le premier mécanisme de réglage (7) comprend une troisième poulie mobile (71) qui déplace et tourne de manière solidaire avec les première et deuxième poulies mobiles (53, 65),
un troisième élément en forme de corde (72) qui est raccordé à la troisième poulie mobile (71) et enroulé autour de la troisième poulie mobile (71) lorsque les première et deuxième poulies mobiles (53, 65) tournent, et
un troisième actionneur (77) qui rembobine le troisième élément en forme de corde (72) enroulé autour de la troisième poulie mobile (71) pour faire tourner les première et deuxième poulies mobiles (53, 65).

9. Main de robot selon la revendication 7 ou 8, **caractérisée en ce que** le premier élément en forme de corde (56) est fixé à la première poulie mobile (53), et
le deuxième élément en forme de corde (66) est fixé à la deuxième poulie mobile (65).

10. Main de robot selon la revendication 9, **caractérisé en ce que** le premier mécanisme de réglage (7) est configuré pour rembobiner le troisième élément en forme de corde (72) au maximum pour placer la troisième poulie mobile (71) dans une première position de rotation prédéterminée et déplace les premier et deuxième doigts (2, 3) dans une première position prédéterminée avec un interstice entre les premier et deuxième doigts (2, 3) maintenu en plaçant la troisième poulie mobile (71) dans la première position de rotation.

11. Main de robot comprenant : un premier doigt et un second doigt (2, 3) ;
un support (4) a un rail de guidage (41) qui supporte le premier doigt (2) et le second doigt (3) pour pouvoir coulisser dans une direction de déplacement qui est une direction d'extension du rail de guidage (41) ; et
un second mécanisme de déplacement (6) qui déplace les premier et second doigts (2, 3) à l'opposé l'un de l'autre dans une direction de déplacement prédéterminée de sorte que les premier et second doigts (2, 3) saisissent une pièce à usiner (W), dans laquelle :
le second mécanisme de déplacement (6) comprend :
une deuxième poulie mobile (65),
un deuxième élément en forme de corde (66) qui a deux extrémités (66a, 66b), dont l'une est raccordée au premier doigt (2) et dont l'autre est raccordée au second doigt (3) et est enroulé autour de la deuxième poulie mobile (65), et
un deuxième actionneur (58) qui déplace la deuxième poulie mobile (65), et
le deuxième actionneur (58) déplace la deuxième poulie mobile (65) de sorte qu'une tension du deuxième élément en forme de corde (66) agit sur les premier et second doigts (2, 3) pour déplacer les premier et second doigts (2, 3) à l'opposé l'un de l'autre, **caractérisée en ce qu'**un second mécanisme de réglage fait tourner la deuxième poulie mobile (65) pour déplacer le deuxième élément en forme de corde (66), et le deuxième élément en forme de corde (66) est fixé à la deuxième poulie mobile (65).

12. Main de robot selon la revendication 11, **caractérisée en ce que** le deuxième mécanisme de déplacement (6) comprend une troisième poulie fixe (61) agencée plus à proximité du premier doigt (2) et une quatrième poulie fixe (62) agencée plus à proximité du second doigt (3) dans la direction de déplacement, et
le deuxième élément en forme de corde (66) est enroulé autour de la troisième poulie fixe (61), de la deuxième poulie mobile (65) et de la quatrième poulie fixe (62) dans cet ordre étant donné que le deuxième élément en forme de corde (66) s'étend à partir du premier doigt (2) jusqu'au second doigt (3).

13. Main de robot selon la revendication 12, **caractérisée en ce que** le second mécanisme de réglage comprend une quatrième poulie mobile (74) qui se déplace et tourne, de manière solidaire, avec la deuxième poulie mobile (65),
un quatrième élément en forme de corde (79) qui est raccordé à la quatrième poulie mobile et enroulé autour de la quatrième poulie mobile lorsque la deuxième poulie mobile (65) tourne, et
un quatrième actionneur qui rembobine de quatrième élément en forme de corde (79) enroulé autour de la quatrième poulie mobile pour faire tourner la deuxième poulie mobile (65).

14. Main de robot selon la revendication 12 ou 13, **caractérisée en ce que** le second mécanisme de réglage est configuré pour rembobiner le quatrième élément en forme de corde (79) au maximum pour placer la quatrième poulie mobile dans une seconde position de rotation prédéterminée et déplace les premier et second doigts (2, 3) dans une seconde position prédéterminée avec un interstice entre les premier et second doigts (2, 3) maintenu en plaçant la quatrième poulie mobile dans la seconde position de rotation.
